# EUROPEAN PATENT APPLICATION

(11) **EP 4 585 364 A1**
(43) Date of publication of application: **16.07.2025**
(21) Application number: 22964409.1
(22) Date of filing: 02.11.2022
(51) Int. Cl.: B23Q 17/00

(54) **TOOL STATE DISPLAY DEVICE, NUMERICAL CONTROL DEVICE FOR MACHINE TOOL, MACHINE TOOL, AND TOOL PREPARATION METHOD**

(71) Applicant: Yamazaki Mazak Corporation, Niwa-gun, Aichi 480-0197 (JP)
(72) Inventor: SAKA, Kotaro, Niwa-gun, Aichi 480-0197 (JP); MIZUTANI, Ryohei, Niwa-gun, Aichi 480-0197 (JP); KOIKE, Shunsuke, Niwa-gun, Aichi 480-0197 (JP); KATAYAMA, Takuro, Niwa-gun, Aichi 480-0197 (JP)
(74) Representative: TBK
(86) International application number: PCT/JP2022/040973
(87) International publication number: WO 2024/095389

(57) **Abstract**

The tool status display device includes a memory, a processor, and a display. The memory stores first data that associates each of a plurality of attachment surfaces of a turret with the tool that is attached to each attachment surface, and second data that identifies whether or not the tool nose positions of the respective tools attached to the turret have already been measured. The processor determines whether or not the designated tool is attached to the designated attachment surface of the turret based on the third data that associates each designated tool designated by a machining program with a designated attachment surface to which the designated tool should be attached, and based on the first data mentioned above. The processor determines whether or not the tool nose position of the designated tool has already been measured based on the third data and the second data mentioned above. The display shows a first image that indicates whether or not the designated tool is attached to the designated attachment surface. The display shows a second image that indicates whether or not the tool nose position of the designated tool has already been measured.

## Description

### Technical Field

The present invention relates to a tool status display device, a numerical controller for machine tools, a machine tool, and a tool preparation method.

### Background Art

Techniques for attaching a tool required for the execution of a machining program to the tool head, and registering the attached tool as tool information, are known.

A relevant technique is described in Patent Literature 1 that discloses a tool exchange method for numerically controlled machine tools. According to the tool exchange method for numerically controlled machine tools described in Patent Literature 1, a first tool information table stores machining tool numbers designated in a machining program, and tool information corresponding to the machine tool numbers. A second tool information table stores tool information of the tools that are actually attached in the machine. These first and second tool information tables are prepared in advance. Next, based on the machining tool numbers designated in the machining program, the tool information corresponding to the machining tool numbers is extracted from the first tool information table. Further, based on the extracted tool information, it is determined whether or not the tool information corresponding to the extracted tool information exists in the second tool information table. When the tool information corresponding to the extracted tool information does not exist in the second tool information table, an error is output (more specifically, a list of missing tools is displayed on the screen). The operator, looking at this screen, checks which tools are missing, and attaches the tools required for the machining. The operator then enters the information of the attached tools into the second tool information table.

### Citation List

### Patent Literature

PTL1: JP 2000-132213 A.

### Summary of Invention

### Problems to be Solved by the Invention

It is an object of the present invention to provide a tool status display device that allows easy recognition of which tool should be attached to the turret and which tool needs measurement to determine its tool nose position, a numerical controller for machine tools, a machine tool, and a tool preparation method.

### Solution to Problem

A tool status display device according to some embodiments include: a memory configured to store first data that associates each of a plurality of attachment surfaces of a turret with a tool that is attached to each attachment surface, and second data that identifies whether or not tool nose positions of respective tools attached to the turret have already been measured; a processor configured to execute: first determination processing for determining whether or not each designated tool defined as a tool designated by a machining program is attached to a designated attachment surface, which is one of the plurality of attachment surfaces, based on third data that associates each designated tool with a designated attachment surface to which the designated tool should be attached, and based on the first data; transmission of a first display command that is generated based on a result of the first determination processing to a display; second determination processing for determining whether or not tool nose positions of respective designated tools have already been measured based on the third data and the second data; and transmission of a second display command that is generated based on a result of the second determination processing to the display; and the display configured to show, in response to receiving the first display command, a first image indicating whether or not each designated tool is attached to the designated attachment surface, and to show, in response to receiving the second display command, a second image indicating whether or not the tool nose position of each designated tool has already been measured.

A numerical controller for machine tools according to some embodiments includes the above-described tool status display device; and a communication circuit configured to send a first control command generated by the processor to a moving unit that moves the turret, and to send a second control command generated by the processor to a rotation drive unit that rotates the turret about a first axis.

A machine tool according to some embodiments includes: a turret having a plurality of attachment surfaces; a memory configured to store first data that associates each of the plurality of attachment surfaces of the turret with the tool that is attached to each attachment surface, second data that identifies whether or not tool nose positions of respective tools attached to the turret have already been measured, and a machining program; a processor configured to execute: first determination processing for determining whether or not each designated tool defined as a tool designated by a machining program is attached to a designated attachment surface, which is one of the plurality of attachment surfaces, based on third data that associates each designated tool with a designated attachment surface to which the designated tool should be attached, and based on the first data; transmission of a first display command that is generated based on a result of the first determination processing to a display; second determination processing for determining whether or not tool nose positions of respective designated tools have already been measured based on the third data and the second data; transmission of a second display command that is generated based on a result of the second determination processing to the display; and generation of a first control command and a second control command by executing the machining program; the display configured to show, in response to receiving the first display command, a first image indicating whether or not each designated tool is attached to the designated attachment surface, and to show, in response to receiving the second display command, a second image indicating whether or not the tool nose position of each designated tool has already been measured; a moving unit configured to move the turret; a rotation drive unit configured to rotate the turret about a first axis; a workpiece holder configured to hold a workpiece; a measurement unit configured to measure tool nose positions; and a communication circuit configured to send the first control command to the moving unit, and to send the second control command to the rotation drive unit.

The tool preparation method according to some embodiments includes: a step of determining whether or not each designated tool defined as a tool designated by a machining program is attached to a designated attachment surface, which is one of a plurality of attachment surfaces, based on third data that associates each designated tool with a designated attachment surface to which the designated tool should be attached, and based on first data that associates each attachment surface of a turret having the plurality of attachment surfaces with a tool attached to each attachment surface; a step of displaying a first image that indicates whether or not each designated tool is attached to the designated attachment surface on a display; a step of determining whether or not a tool nose position of each designated tool has already been measured based on second data that identifies whether or not the tool nose position of each tool attached to the turret has already been measured, and the third data; and a step of displaying a second image that indicates whether or not the tool nose position of each designated tool has already been measured on the display.

### Effects of Invention

The present invention can provide a tool status display device that allows easy recognition of which tool should be attached to the turret and which tool needs measurement to determine its tool nose position, a numerical controller for machine tools, a machine tool, and a tool preparation method.

### Brief Description of Drawings

[FIG. 1] FIG. 1 is a diagram illustrating one example of a machine tool in the first embodiment.
[FIG. 2] FIG. 2 is a block diagram illustrating a hardware configuration example of a tool status display device in the first embodiment.
[FIG. 3] FIG. 3 is a diagram illustrating one example of a machining program.
[FIG. 4] FIG. 4 is a diagram illustrating one example of a turret.
[FIG. 5] FIG. 5 is a diagram illustrating how a processor executes first determination processing.
[FIG. 6] FIG. 6 is a diagram illustrating one example of third data stored in a memory.
[FIG. 7] FIG. 7 is a diagram illustrating a first image shown on a display.
[FIG. 8] FIG. 8 is a diagram illustrating how the processor executes second determination processing.
[FIG. 9] FIG. 9 is a diagram illustrating a second image shown on the display.
[FIG. 10] FIG. 10 is a diagram illustrating the first image shown on the display.
[FIG. 11] FIG. 11 is a diagram illustrating the second image shown on the display.
[FIG. 12] FIG. 12 is a diagram illustrating how the processor executes third determination processing.
[FIG. 13] FIG. 13 is a diagram illustrating a third image shown on the display.
[FIG. 14] FIG. 14 is a block diagram illustrating a hardware configuration example of the tool status display device in the first embodiment.
[FIG. 15] FIG. 15 is a diagram illustrating one example of first data stored in the memory.
[FIG. 16] FIG. 16 is a diagram illustrating one example of second data stored in the memory.
[FIG. 17] FIG. 17 is a diagram illustrating one example of fourth data stored in the memory.
[FIG. 18] FIG. 18 is a diagram illustrating the third image shown on the display.
[FIG. 19] FIG. 19 is a diagram illustrating the third image shown on the display.
[FIG. 20] FIG. 20 is a diagram illustrating the third image shown on the display.
[FIG. 21] FIG. 21 is a diagram illustrating the third image shown on the display.
[FIG. 22] FIG. 22 is a diagram illustrating the third image shown on the display.
[FIG. 23] FIG. 23 is a diagram illustrating the first image shown on the display.
[FIG. 24] FIG. 24 is a diagram illustrating the first image shown on the display.
[FIG. 25] FIG. 25 is a diagram illustrating the first image shown on the display.
[FIG. 26] FIG. 26 is a diagram illustrating the third image shown on the display.
[FIG. 27] FIG. 27 is a diagram illustrating the second image shown on the display.
[FIG. 28] FIG. 28 is a diagram illustrating the second image shown on the display.
[FIG. 29] FIG. 29 is a diagram illustrating a measurement macro shown on the display.
[FIG. 30] FIG. 30 is a diagram illustrating the measurement macro shown on the display.
[FIG. 31] FIG. 31 is a diagram illustrating the second image shown on the display.
[FIG. 32] FIG. 32 is a block diagram illustrating a hardware configuration example of a numerical controller for machine tools in the first embodiment.
[FIG. 33] FIG. 33 is a diagram illustrating one example of a machine tool in the first embodiment.
[FIG. 34] FIG. 34 is a block diagram illustrating a hardware configuration example of a numerical controller for machine tools in the first embodiment.
[FIG. 35] FIG. 35 is a diagram illustrating the second image shown on the display.
[FIG. 36] FIG. 36 is a schematic cross-sectional diagram illustrating one part of the machine tool in the first embodiment.
[FIG. 37] FIG. 37 is a block diagram illustrating a hardware configuration example of the numerical controller for machine tools in the first embodiment.
[FIG. 38] FIG. 38 is a diagram illustrating the first image shown on the display.
[FIG. 39] FIG. 39 is a flowchart showing one example of the tool preparation method in the second embodiment.
[FIG. 40] FIG. 40 is a flowchart showing one example of the tool preparation method in the second embodiment.
[FIG. 41] FIG. 41 is a diagram illustrating one example of first data stored in the memory.

### Description of Embodiments

Hereinafter, a tool status display device 1A, a numerical controller 10A for machine tools, a machine tool 100A, and a tool preparation method according to some embodiments will be described with reference to the drawings. In the following description of the embodiment, parts and components that have identical functions are given the same reference numerals, and repetitive descriptions of these parts and components with the same reference numerals will be omitted.

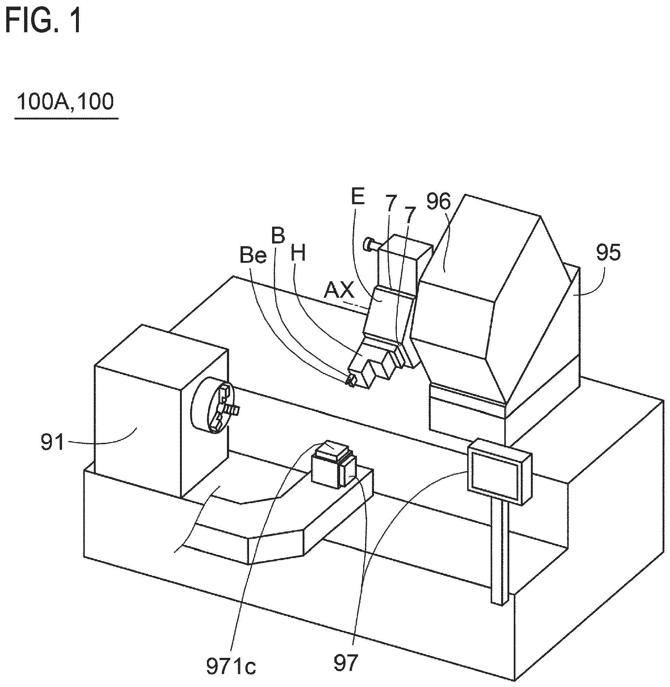

As illustrated in FIG. 1, a tool B is usually attached to an attachment surface 7 of a turret E via a tool holding unit H (e.g., tool holder). It follows that attaching the tool to the turret herein shall include attaching the tool to the turret via the tool holding unit.

### (First embodiment)

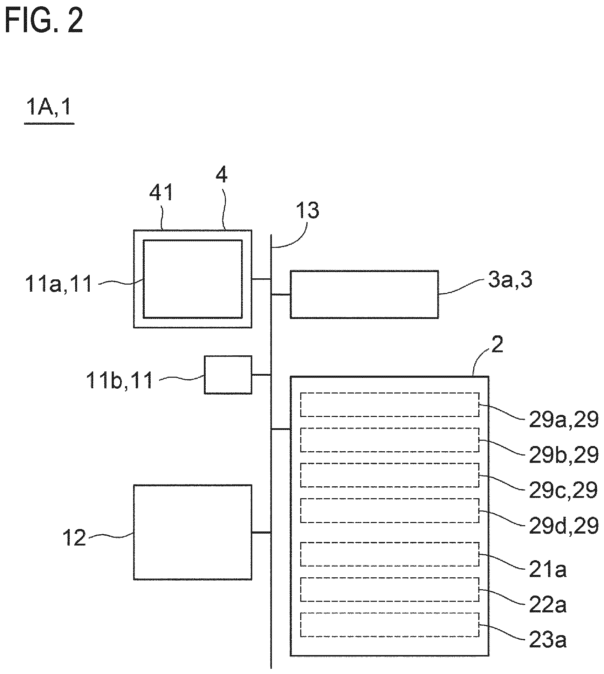

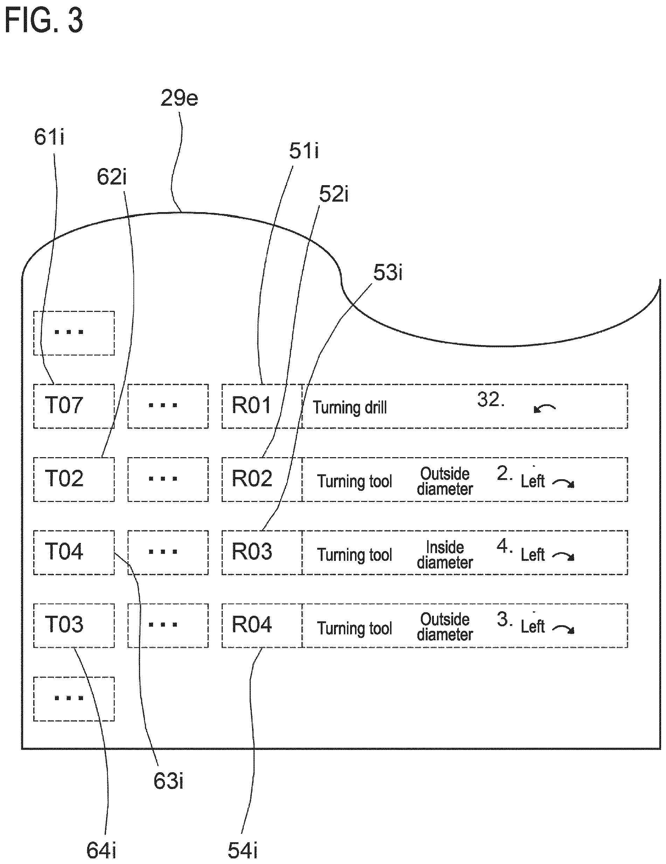

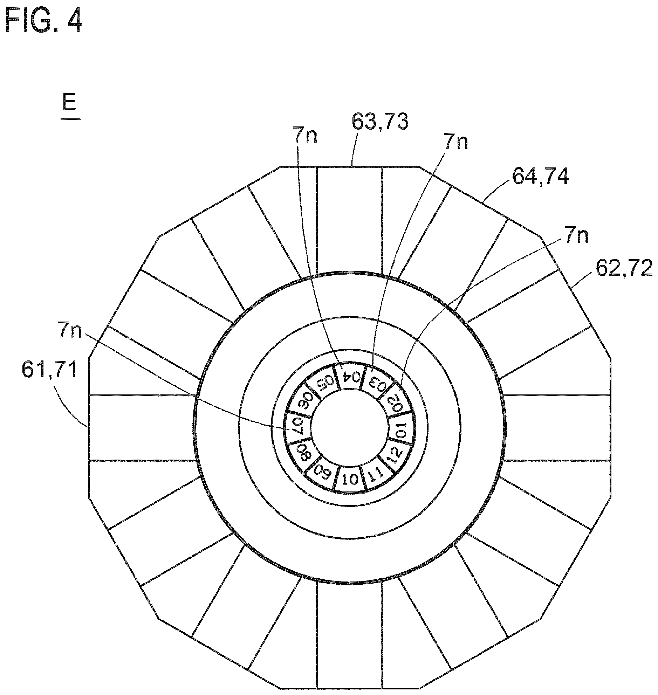

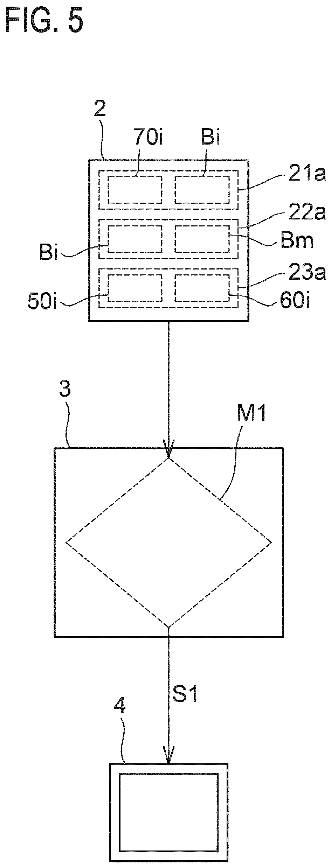

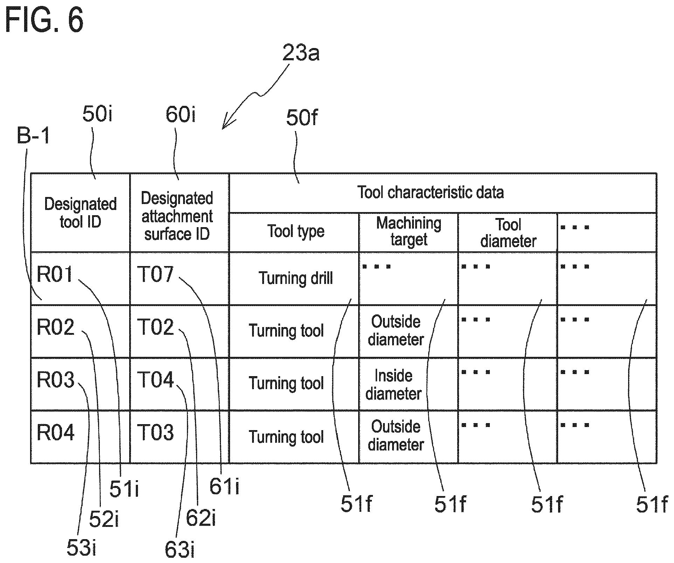

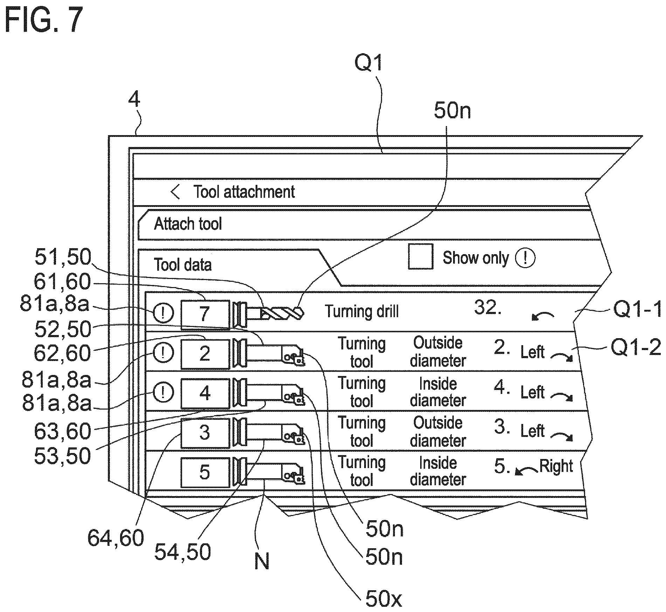

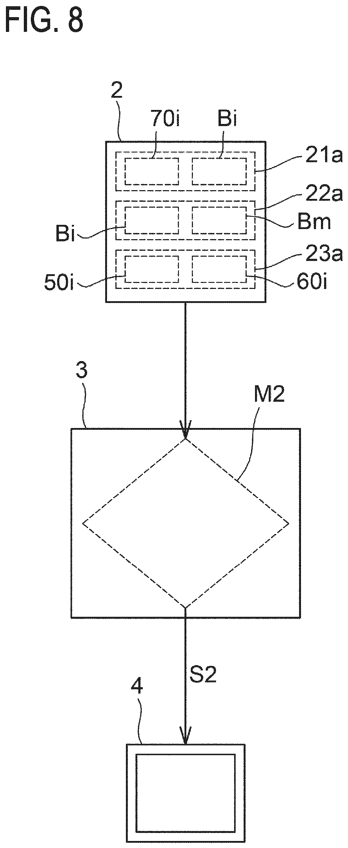

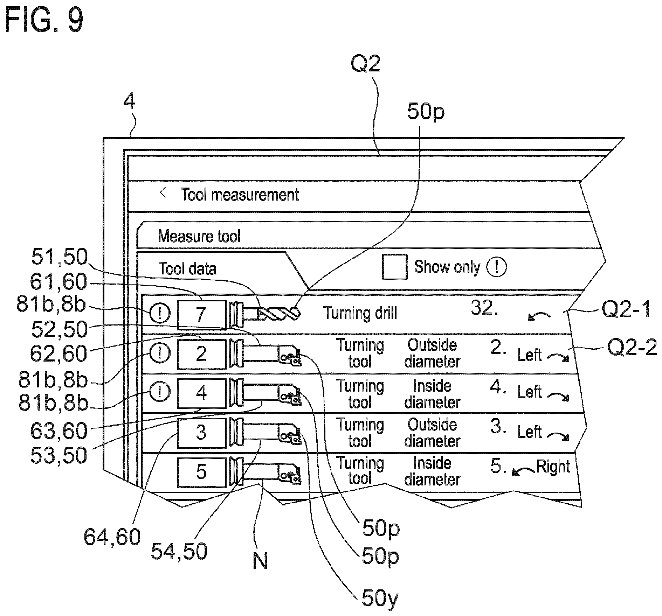

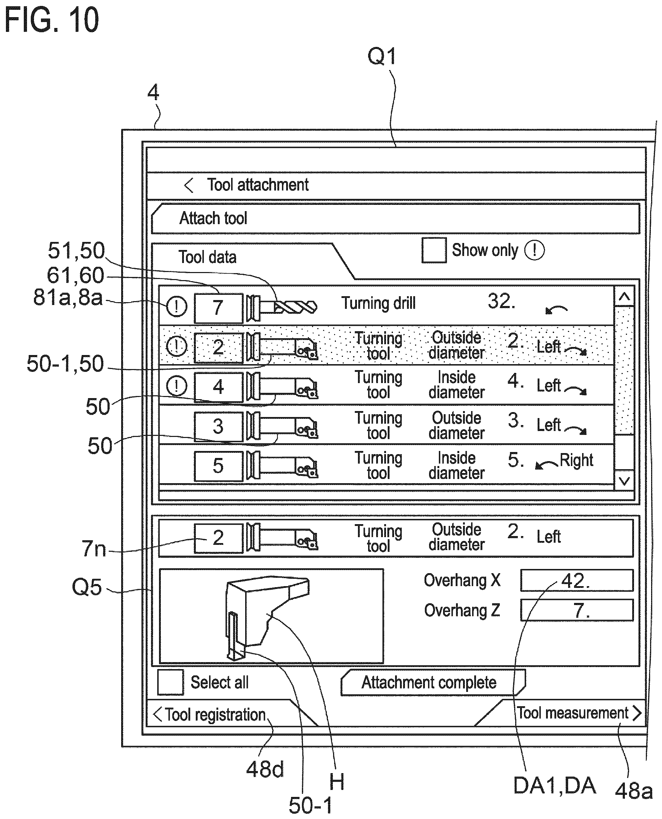

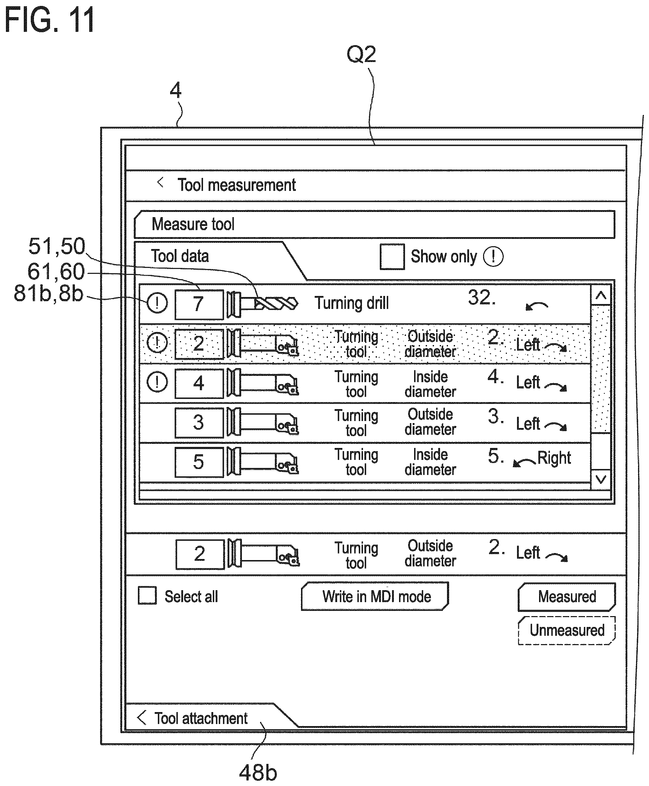

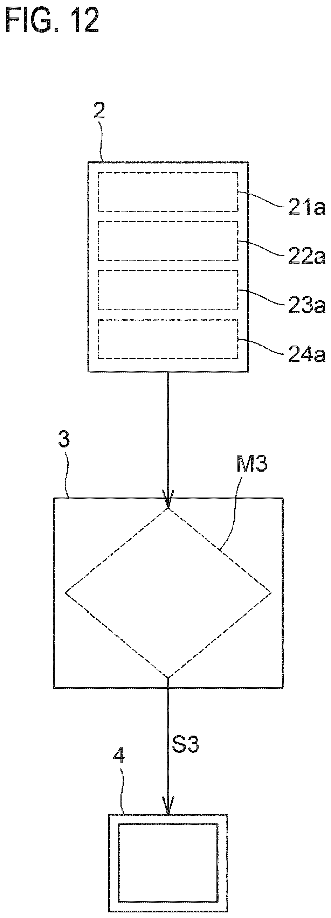

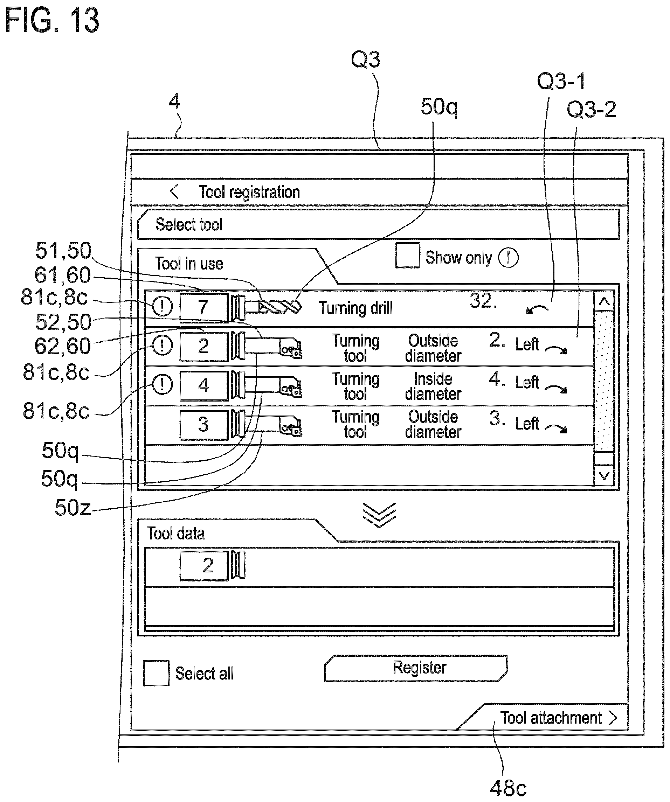

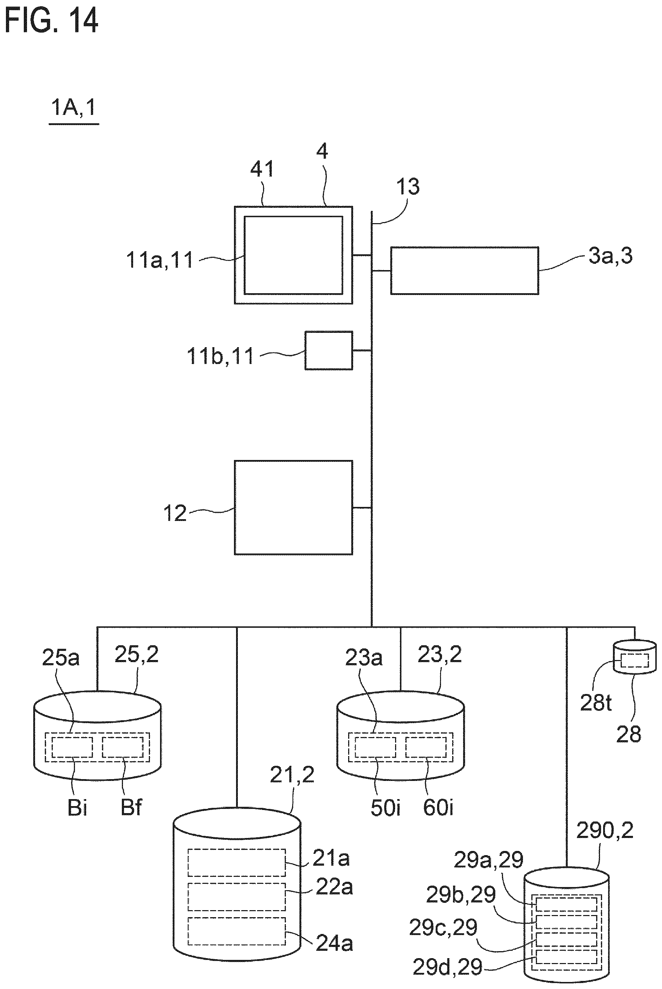

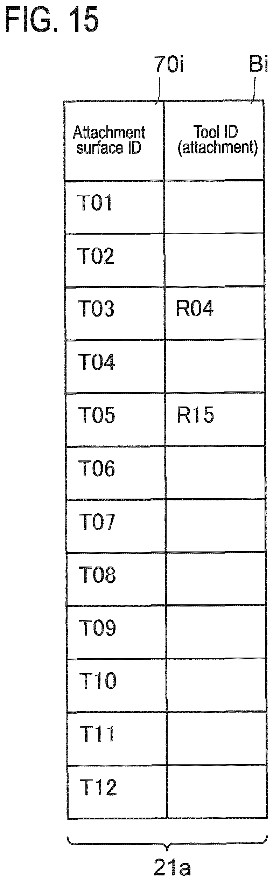

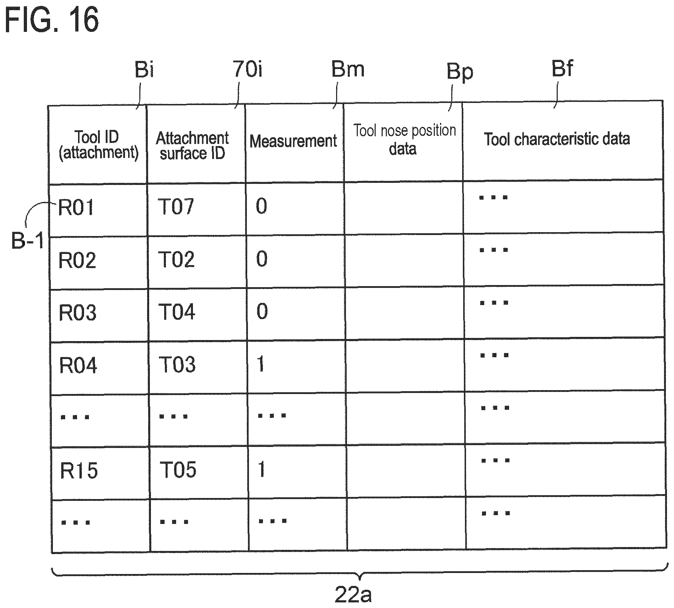

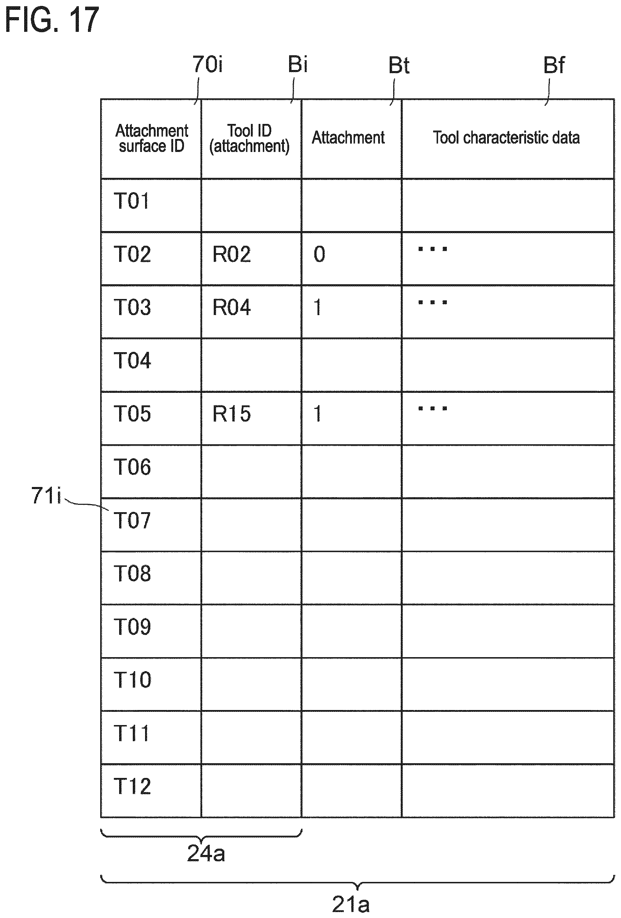

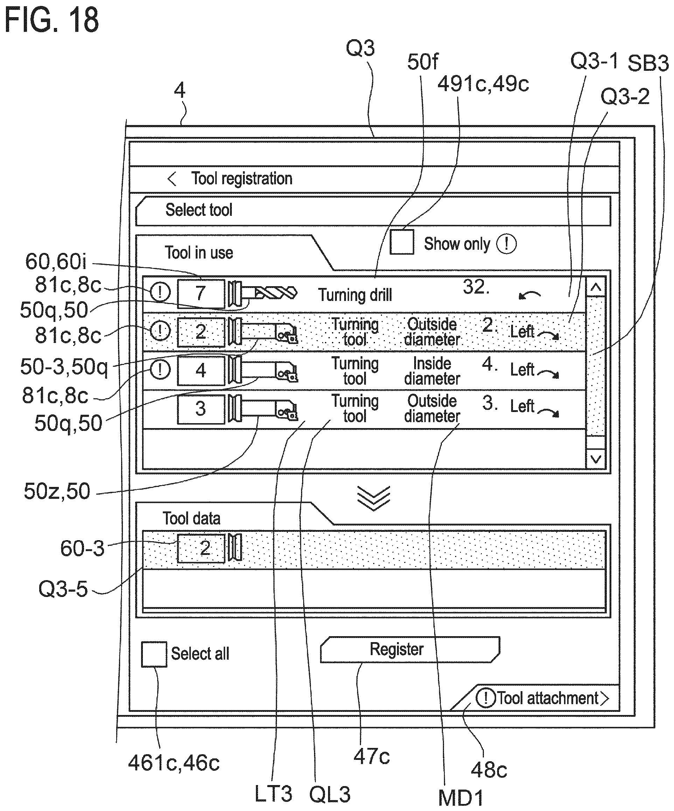

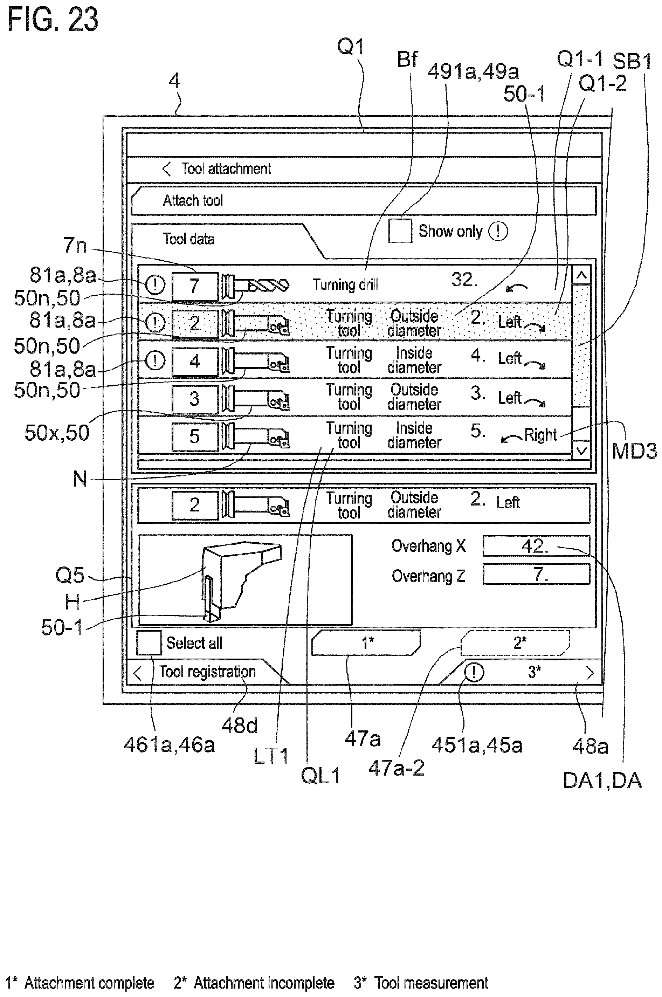

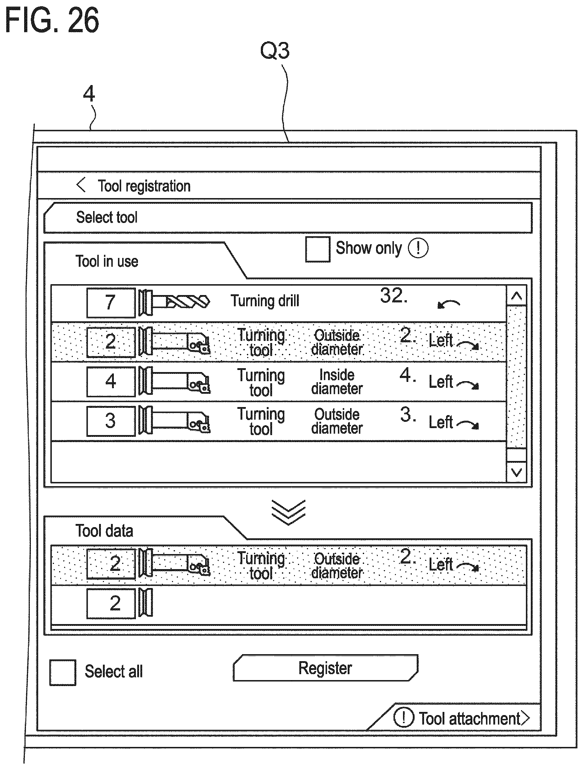

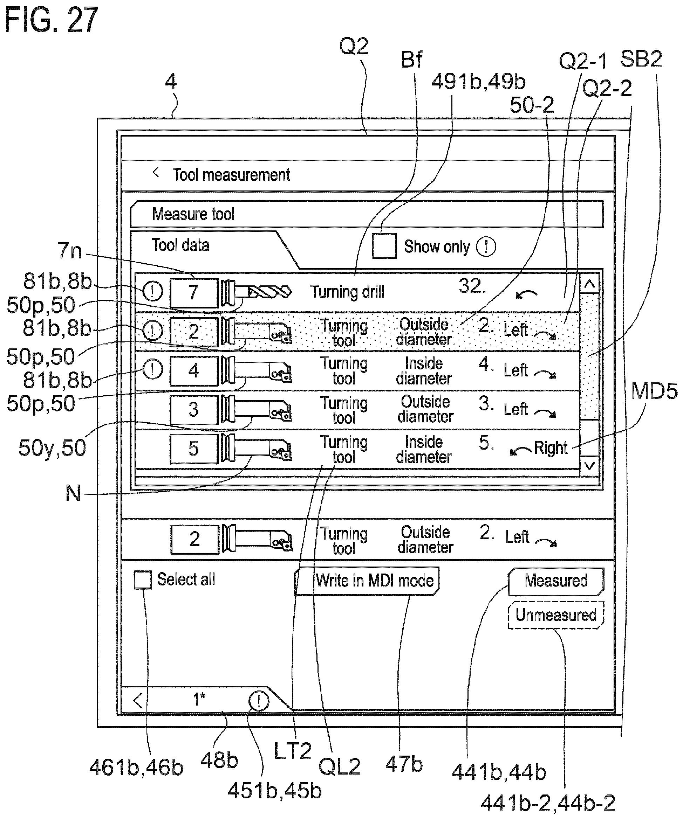

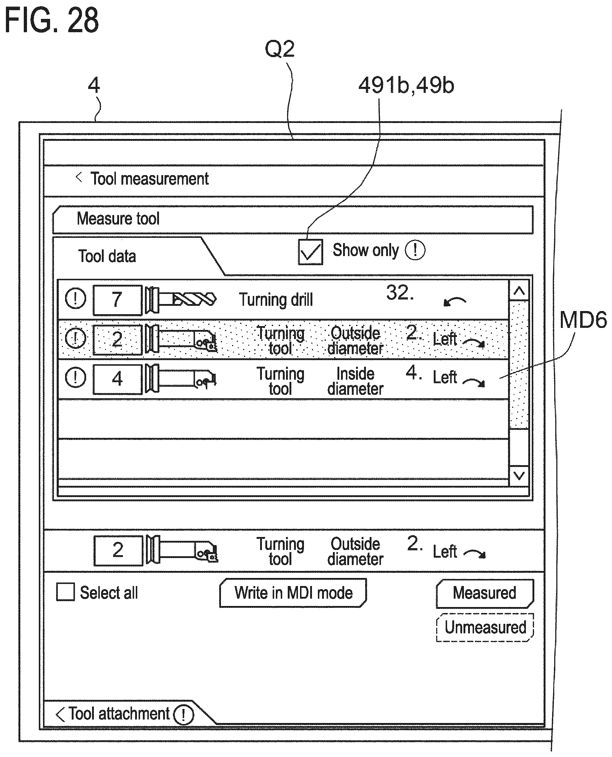

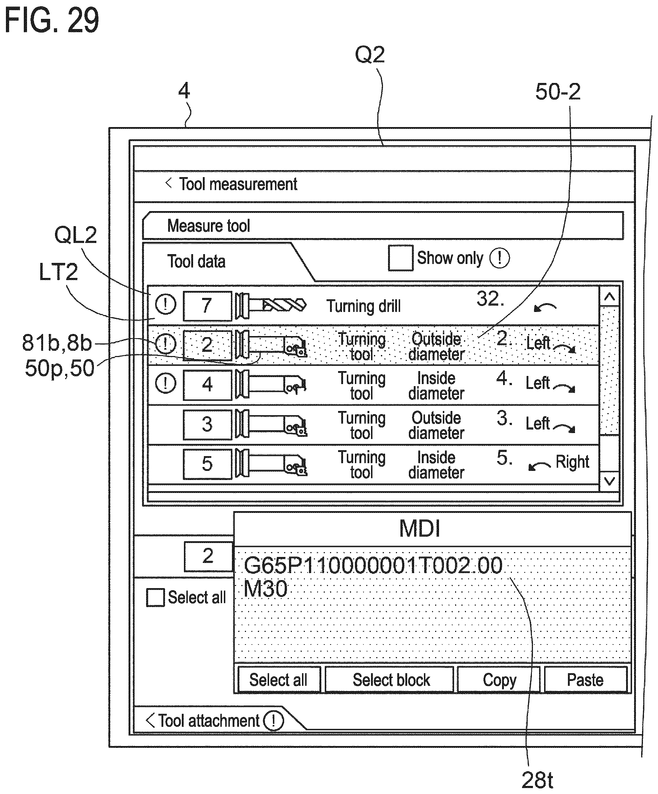

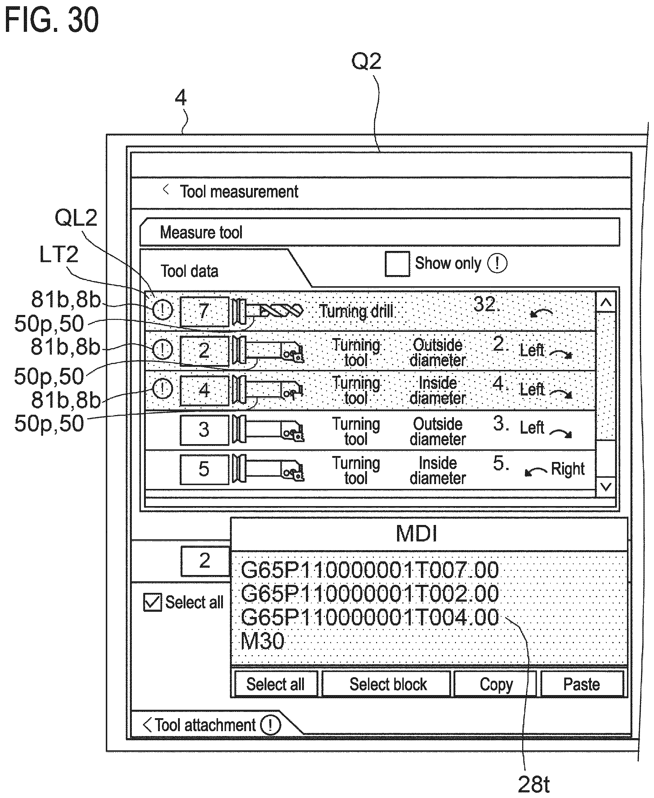

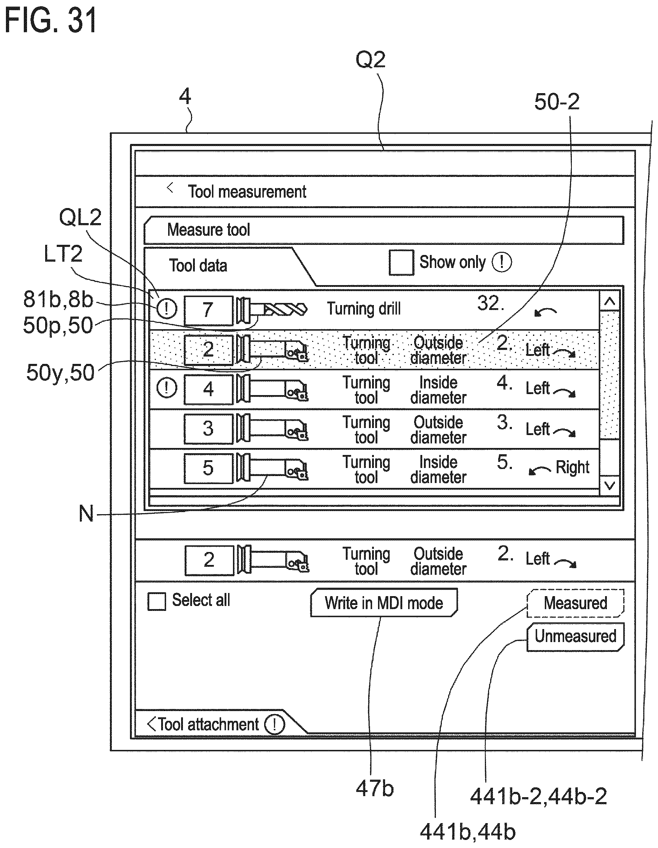

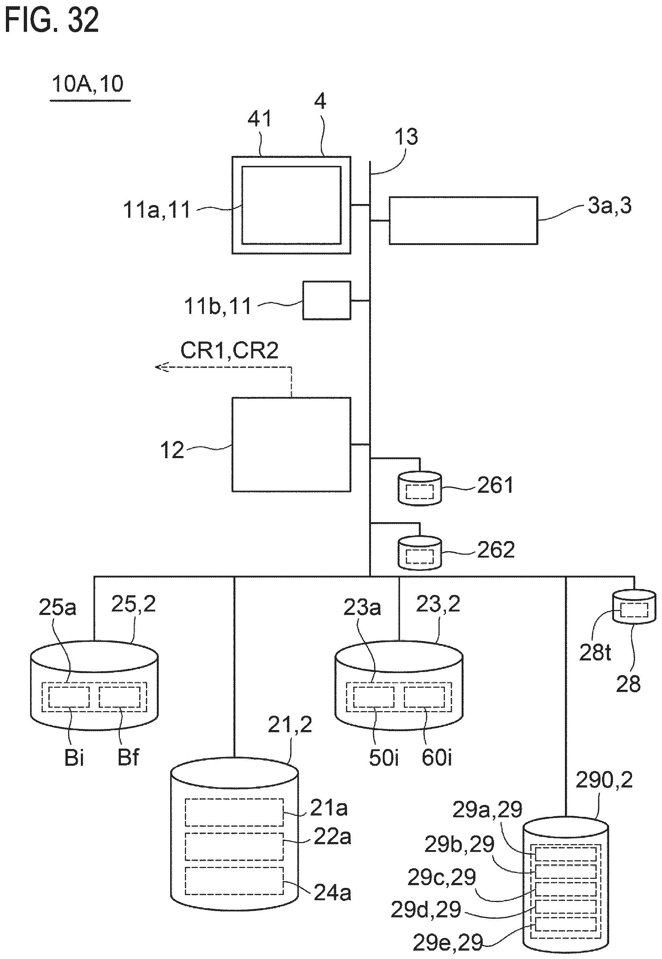

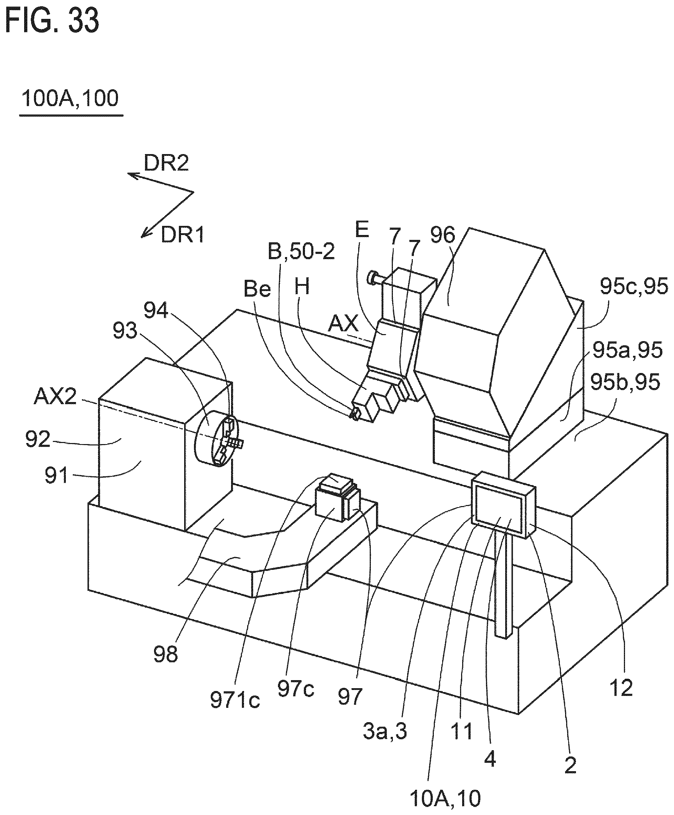

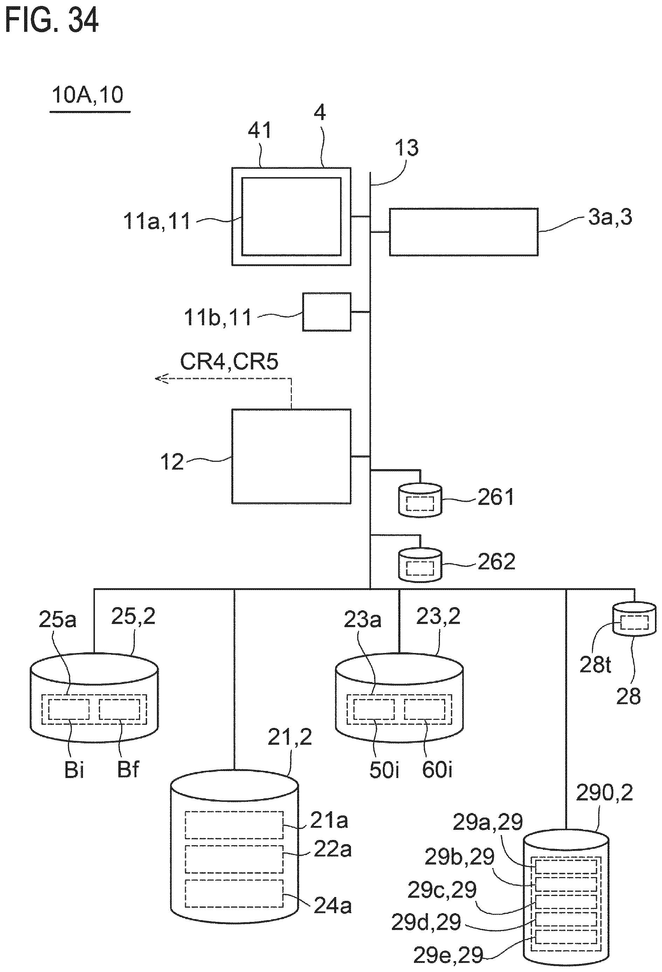

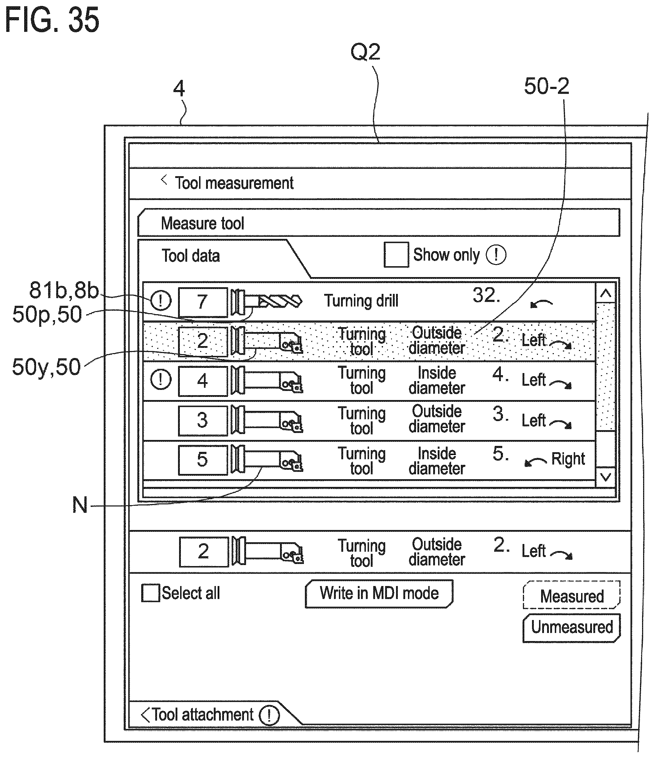

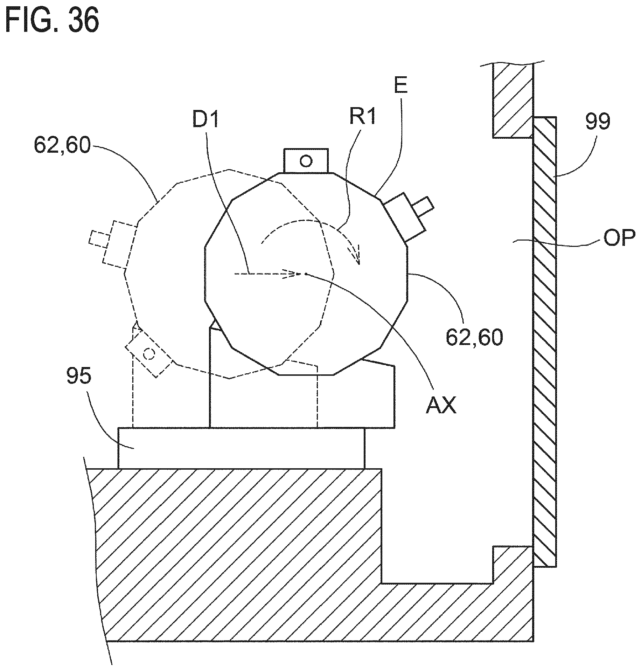

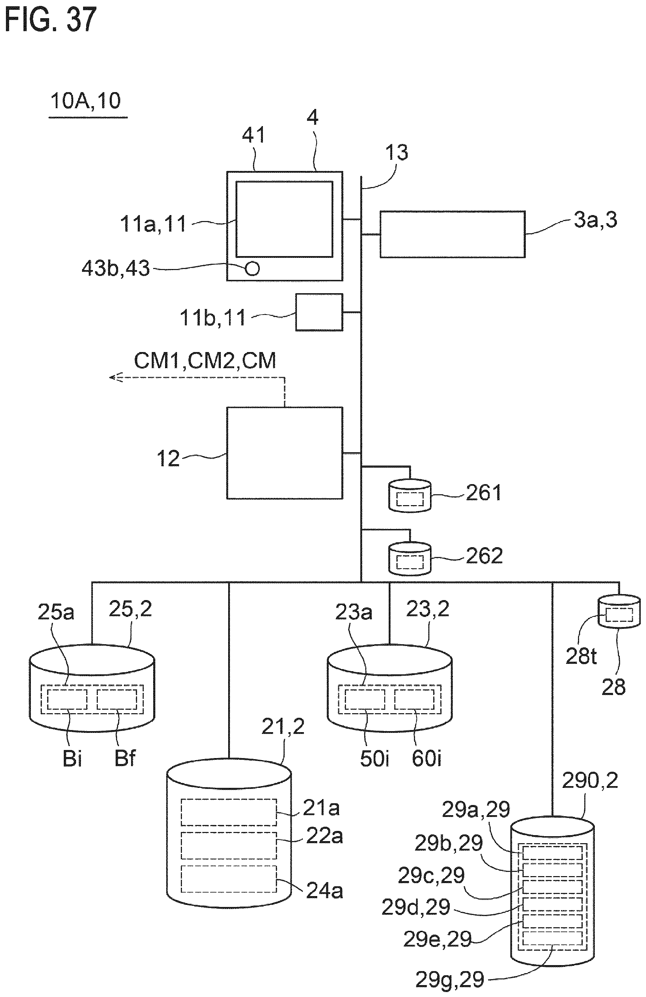

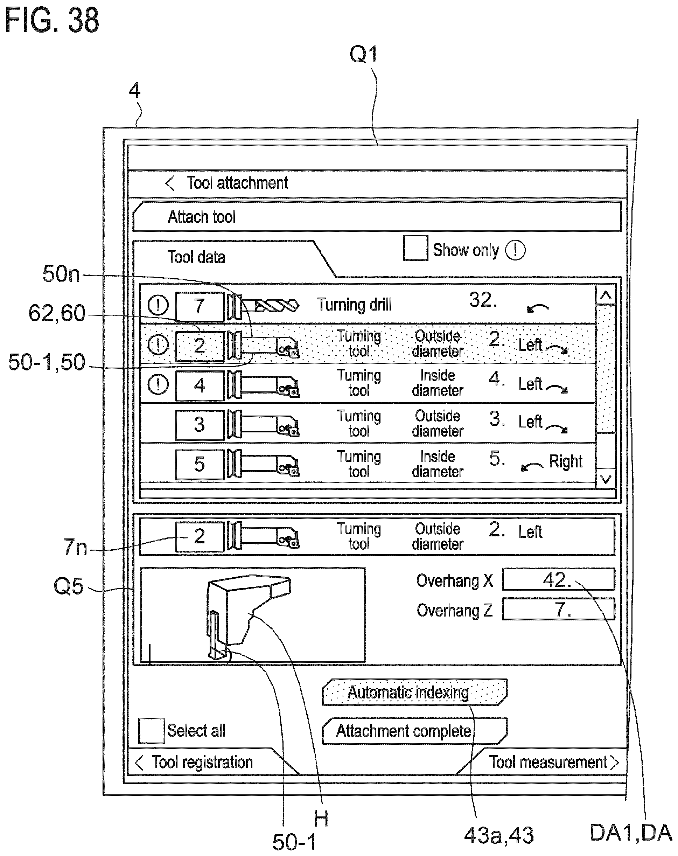

Hereinafter, a tool status display device 1A, a numerical controller 10A for machine tools, a machine tool 100A, and a tool preparation method in the first embodiment will be described with reference to FIG. 1 to FIG. 38. FIG. 1 is a diagram illustrating one example of the machine tool 100A in the first embodiment. FIG. 2 is a block diagram illustrating a hardware configuration example of the tool status display device 1A in the first embodiment. FIG. 3 is a diagram illustrating one example of a machining program 29e. FIG. 4 is a diagram illustrating one example of the turret E. FIG. 5 is a diagram illustrating how a processor 3 executes first determination processing M1. FIG. 6 is a diagram illustrating one example of third data 23a stored in a memory 2. FIG. 7 is a diagram illustrating a first image Q1 shown on a display 4. FIG. 8 is a diagram illustrating how the processor 3 executes second determination processing M2. FIG. 9 is a diagram illustrating a second image Q2 shown on the display 4. FIG. 10 is a diagram illustrating the first image Q1 shown on the display 4. FIG. 11 is a diagram illustrating the second image Q2 shown on the display 4. FIG. 12 is a diagram illustrating how the processor 3 executes third determination processing M3. FIG. 13 is a diagram illustrating a third image Q3 shown on the display 4. FIG. 14 is a block diagram illustrating a hardware configuration example of the tool status display device 1A in the first embodiment. FIG. 15 is a diagram illustrating one example of first data 21a stored in the memory 2. FIG. 16 is a diagram illustrating one example of second data 22a stored in the memory 2. FIG. 17 is a diagram illustrating one example of fourth data 24a stored in the memory 2. FIG. 18 to FIG. 22 are diagrams each illustrating the third image Q3 shown on the display 4. FIG. 23 to FIG. 25 are diagrams each illustrating the first image Q1 shown on the display 4. FIG. 26 is a diagram illustrating the third image Q3 shown on the display 4. FIG. 27 and FIG. 28 are diagrams each illustrating the second image Q2 shown on the display 4. FIG. 29 and FIG. 30 are diagrams each illustrating a measurement macro 28t shown on the display 4. FIG. 31 is a diagram illustrating the second image Q2 shown on the display 4. FIG. 32 is a block diagram illustrating a hardware configuration example of the numerical controller 10A for machine tools in the first embodiment. FIG. 33 is a diagram illustrating one example of the machine tool 100A in the first embodiment. FIG. 34 is a block diagram illustrating a hardware configuration example of the numerical controller 10A for machine tools in the first embodiment. FIG. 35 is a diagram illustrating the second image Q2 shown on the display 4. FIG. 36 is a schematic cross-sectional diagram illustrating one part of the machine tool 100A in the first embodiment. FIG. 37 is a block diagram illustrating a hardware configuration example of the numerical controller 10A for machine tools in the first embodiment. FIG. 38 is a diagram illustrating the first image Q1 shown on the display 4.

As illustrated in FIG. 1, the machine tool 100A includes the turret E, a workpiece holder 91 that can hold a workpiece, a moving unit 95 that moves the turret E, a rotation drive unit 96 that rotates the turret E about a first axis AX, and a measurement unit 97 that measures the tool nose positions.

The turret E has a plurality of attachment surfaces 7. Each of the plurality of attachment surfaces 7 allows a tool B to be attached thereto.

The measurement unit 97 measures the position of the tool nose Be of the tool B that is attached to the turret E. More specifically, the measurement unit 97 measures the position of the turret E when the tool nose Be of the tool B attached to the turret E makes contact with a contact surface 971c of the measurement unit 97 to determine the relative position of the tool nose Be of the tool B relative to a reference point of the turret E.

As illustrated in FIG. 2, the tool status display device 1A includes a memory 2, a processor 3, and a display 4. The tool status display device 1A may include an input unit 11. The input unit 11 may be integrated into the display 4 (more specifically, the display 4 may be a display 41 with a touchscreen including a built-in input unit 11a). Alternatively, or additionally, the tool status display device 1A may include input units 11b provided separately from the display 4 (such as, for example, a button, switch, lever, pointing device, keyboard, and so on).

Additionally, the tool status display device 1A may include a communication circuit 12.

In the example depicted in FIG. 2, the memory 2, processor 3, communication circuit 12, display 4, and/or input unit 11 are all interconnected via a bus 13. The processor 3 includes at least one processor 3a (e.g., at least one CPU).

The memory 2 is a storage medium readable by the processor 3. The memory 2 may for example be a non-volatile or volatile semiconductor memory such as a RAM, ROM, or flash memory, or a magnetic disc, or any other types of memories. The memory 2 stores programs 29 (e.g., a determination processing program 29a, a macro generating program 29b, a tool nose position measurement program 29c, a display program 29d, etc.), and data (e.g., first data 21a, second data 22a, third data 23a, etc., to be described later).

The memory 2 may be distributed in several locations. For example, a memory that stores data may be provided separately from the memory that stores the program 29.

A part of the memory 2 may be located away from the communication circuit 12. In other words, a part of the memory 2 may provide the processor 3 with a part of the program 29 or a part of the data via the communication circuit 12 when the processor 3 executes the program 29.

In the example depicted in FIG. 3, the machining program 29e designates a tool to be used for the machining of a workpiece. A tool that is designated by the machining program 29e is herein defined as a "designated tool." The machining program 29e designates one or a plurality of tools 50. In the example depicted in FIG. 3, the machining program 29e designates a first designated tool using a first designated tool identifier 51i, and a second designated tool using a second designated tool identifier 52i. The machining program 29e also designates a third designated tool using a third designated tool identifier 53i, and a fourth designated tool using a fourth designated tool identifier 54i.

One of the plurality of attachment surfaces 7 of the turret E to which a designated tool 50 should be attached is herein defined as a designated attachment surface 60.

In the example depicted in FIG. 3, the machining program 29e designates attachment surfaces of the turret E to which the respective designated tools 50 should be attached (namely, designated attachment surfaces 60). In the example depicted in FIG. 3, the machining program 29e designates a first designated attachment surface to which the first designated tool should be attached using a first designated attachment surface identifier 61i. The machining program 29e designates a second designated attachment surface to which the second designated tool should be attached using a second designated attachment surface identifier 62i. The machining program 29e designates a third designated attachment surface to which the third designated tool should be attached using a third designated attachment surface identifier 63i. The machining program 29e designates a fourth designated attachment surface to which the fourth designated tool should be attached using a fourth designated attachment surface identifier 64i.

The machining program 29e is executed by a computer (more specifically, the processor 3 of the numerical controller 10A to be described later) to control the movement of the tool.

As illustrated in FIG. 4, the turret E has a plurality of attachment surfaces 7. The turret E has a first attachment surface 71 that is the first designated attachment surface 61 mentioned above. The turret E has a second attachment surface 72 that is the second designated attachment surface 62 mentioned above. The turret E has a third attachment surface 73 that is the third designated attachment surface 63 mentioned above, and a fourth attachment surface 74 that is the fourth designated attachment surface 64 mentioned above. In the example depicted in FIG. 4, each attachment surface of the turret E is given an identification number 7n.

In the example depicted in FIG. 5, the memory 2 stores first data 21a. The first data 21a is data that associates the attachment surfaces 7 of the turret E with the tools B attached to the respective attachment surfaces 7. In the example depicted in FIG. 5, the first data 21a associates attachment surface identifiers 70i identifying the respective attachment surfaces 7 of the turret E with tool identifiers Bi identifying the tools B attached to the respective attachment surfaces 7, to associate the attachment surfaces 7 of the turret E with the tools B attached to the respective attachment surfaces 7. The attachment surface identifiers 70i may each include a number that matches the identification number 7n (see FIG. 4).

In the example depicted in FIG. 5, the memory 2 stores second data 22a. The second data 22a identifies whether or not the tool nose positions of the respective tools B attached to the turret E have already been measured. In the example depicted in FIG. 5, the second data 22a identifies whether or not the tool nose positions of the respective tools B attached to the turret E have already been measured by associating the tool identifiers Bi that identify the tools B on the respective attachment surfaces 7 with the data Bm that identifies whether or not the tool nose positions of the tools B have already been measured.

As illustrated in FIG. 5, the memory 2 may store third data 23a. The third data 23a associates each designated tool 50 with a designated attachment surface 60 to which the designated tool 50 should be attached. In the example depicted in FIG. 5, the third data 23a associates the designated tool identifiers 50i identifying the designated tools 50 with the attachment surface identifiers 60i identifying the designated attachment surfaces 60 to which the designated tools 50 should be attached, to associate each designated tool 50 with the designated attachment surface 60 to which the designated tool 50 should be attached.

In the third data 23a, the first designated tool 51 designated by the machining program 29e may be associated with the first designated attachment surface 61 designated by the machining program 29e. In the example depicted in FIG. 6, the third data 23a associates the first designated tool identifier 51i (R01) identifying the first designated tool 51 with the first attachment surface identifier 61i (T07) identifying the first designated attachment surfaces 61 to which the first designated tool 51 should be attached. In the third data 23a, a second designated tool 52 designated by the machining program 29e may be associated with a second designated attachment surface 62 designated by the machining program 29e. In the example depicted in FIG. 6, the third data 23a associates the second designated tool identifier 52i (R02) identifying the second designated tool 52 with the second attachment surface identifier 62i (T02) identifying the second designated attachment surfaces 62 to which the second designated tool 52 should be attached.

The third data 23a may be created based on the machining program 29e. The third data 23a may be created by other devices than the tool status display device 1A. In this case, the processor 3 receives the third data 23a from other devices than the tool status display device 1A via the communication circuit 12 and stores it in the memory 2. Alternatively, the processor 3 of the tool status display device 1A may create the third data 23a. For example, the processor 3 may analyze the machining program 29e, and create the third data 23a based on the analysis.

In the example depicted in FIG. 5, the processor 3 executes a determination processing program 29a stored in the memory 2 to implement first determination processing M1. More specifically, the processor 3 executes the first determination processing M1 for determining whether or not each designated tool 50 is attached to the designated attachment surface 60, which is one of the plurality of attachment surfaces 7 of the turret E, based on the third data 23a that associates each designated tool 50 with the designated attachment surface 60 to which the designated tool 50 should be attached, and the first data 21a described above.

The first determination processing M1 includes (1) determining whether or not the first designated tool 51 designated by the machining program 29e is attached to the first designated attachment surface 61 that is one of the plurality of attachment surfaces 7. Additionally, the first determination processing M1 may include (2) determining whether or not the second designated tool 52 designated by the machining program 29e is attached to the second designated attachment surface 62 that is one of the plurality of attachment surfaces 7. Where "K" represents any natural number equal to or greater than 3, the first determination processing M1 may include determining whether or not the "K-th" designated tool designated by the machining program 29e is attached to the "K-th" designated attachment surface that is one of the plurality of attachment surfaces 7.

The processor 3 executes a display program 29d stored in the memory 2 to generate a first display command S1 based on the results of the first determination processing M1. The processor 3 sends the first display command S1 that is generated based on the results of the first determination processing M1 to the display 4.

As illustrated in FIG. 7, the display 4 shows a first image Q1 that indicates whether or not each designated tool 50 is attached to the designated attachment surface 60, in response to receiving the first display command S1.

In the example depicted in FIG. 7, the first image Q1 includes (1) a sub image Q1-1 indicating whether or not the first designated tool 51 is attached to the first designated attachment surface 61. Additionally, the first image Q1 may include (2) a sub image Q1-2 indicating whether or not the second designated tool 52 is attached to the second designated attachment surface 62. Where "K" represents any natural number equal to or greater than 3, the first image Q1 may include (3) a sub image indicating whether or not the "K-th" designated tool is attached to the "K-th" designated attachment surface.

Among all the designated tools 50 to be designated by the machining program 29e, the designated tools 50 before they are attached to the designated attachment surfaces 60 are herein defined as unattached designated tools 50n. Among all the designated tools 50 to be designated by the machining program 29e, the designated tools 50 that are attached to the designated attachment surfaces 60 are herein defined as attached designated tools 50x.

In the example depicted in FIG. 7, of all the designated tools 50, the unattached designated tools 50n are added with an attention mark 81a (e.g., exclamation mark) in the first image Q1. Of all the designated tools 50, the attached designated tools 50x are not added with the attention mark 81a in the first image Q1. In the example depicted in FIG. 7, the tools that are not designated by the machining program 29e (hereinafter, "non-designated tool N") are not added with the attention mark, either.

In the example depicted in FIG. 7, the operator can recognize whether each designated tool 50 is an unattached designated tool 50n or an attached designated tool 50x based on the presence or absence of the attention mark 81a.

In the example depicted in FIG. 7, the first image Q1 includes the attention marks 81a as information 8a that indicates whether or not each designated tool 50 is attached to the designated attachment surface 60. Alternatively, or additionally, the first image Q1 may include some text information or highlighting as the information 8a.

In the example depicted in FIG. 8, the processor 3 executes the determination processing program 29a stored in the memory 2 to implement second determination processing M2. More specifically, the processor 3 executes the second determination processing M2 for determining whether or not the tool nose position of each designated tool 50 has already been measured based on the third data 23a and the second data 22a described above.

The second determination processing M2 includes (1) determining whether or not the tool nose position of the first designated tool 51 designated by the machining program 29e has already been measured. Additionally, the second determination processing M2 may include (2) determining whether or not the tool nose position of the second designated tool 52 designated by the machining program 29e has already been measured. Where "K" represents any natural number equal to or greater than 3, the second determination processing M2 may include (3) determining whether or not the tool nose position of the "K-th" designated tool designated by the machining program 29e has already been measured.

The processor 3 executes the display program 29d stored in the memory 2 to generate a second display command S2 based on the results of the second determination processing M2. The processor 3 sends the second display command S2 that is generated based on the results of the second determination processing M2 to the display 4.

As illustrated in FIG. 9, the display 4 shows a second image Q2 that indicates whether or not the tool nose position of each designated tool 50 designated by the machining program 29e has already been measured, in response to receiving the second display command S2.

In the example depicted in FIG. 9, the second image Q2 includes (1) a sub image Q2-1 indicating whether or not the tool nose position of the first designated tool 51 has already been measured. Additionally, the second image Q2 may include (2) a sub image Q2-2 indicating whether or not the tool nose position of the second designated tool 52 has already been measured. Where "K" represents any natural number equal to or greater than 3, the second image Q2 may include (3) a sub image indicating whether or not the tool nose position of the "K-th" designated tool has already been measured.

Among all the designated tools 50, the tools before their tool nose positions are measured are herein defined as unmeasured designated tools 50p. Among all the designated tools 50, the tools whose tool nose positions have already been measured are herein defined as measured designated tools 50y.

In the example depicted in FIG. 9, of all the designated tools 50, the unmeasured designated tools 50p are added with an attention mark 81b (e.g., exclamation mark) in the second image Q2. Of all the designated tools 50, the measured designated tools 50y are not added with the attention mark in the second image Q2. In the example depicted in FIG. 9, the non-designated tools N that are not designated by the machining program 29e are not added with the attention mark, either.

In the example depicted in FIG. 9, the operator can recognize whether each designated tool 50 is an unmeasured designated tool 50p or a measured designated tool 50y based on the presence or absence of the attention mark 81b.

In the example depicted in FIG. 9, the second image Q2 includes the attention marks 81b as information 8b that indicates whether or not the tool nose position of each designated tool 50 has already been measured. Alternatively, or additionally, the second image Q2 may include some text information or highlighting as the information 8b.

The tool status display device 1A in the first embodiment allows the operator to readily recognize whether or not each designated tool 50 designated by the machining program 29e is attached to the designated attachment surface 60 designated by the machining program 29e, as well as whether or not the tool nose position of each designated tool 50 designated by the machining program 29e has already been measured. This allows the operator to efficiently perform the preparation operation before the machining of the workpiece.

For example, let us assume that at least one of a plurality of designated tools 50 designated by the machining program 29e is an unmeasured designated tool 50p, and at least one of the plurality of designated tools 50 is a measured designated tool 50y. In such a case, the tool status display device 1A in the first embodiment allows the operator to readily identify an unmeasured designated tool 50p. The tool nose position measurement is performed only for the unmeasured designated tool 50p, so that unnecessary measurement operation is avoided. The higher efficiency of the preparation operation before the machining of the workpiece can increase the operation rate of the machine tool.

Moreover, the tool status display device 1A in the first embodiment is able to present a first image Q1, which indicates whether each of the designated tools 50 is an unattached designated tool 50n or an attached designated tool 50x, as well as a second image Q2, which indicates whether each of the designated tools 50 is an unmeasured designated tool 50p or a measured designated tool 50y, on the display 4. The operator can therefore easily recognize the state of progress of the attachment operation of the designated tools 50 by checking the first image Q1. Also, the operator can easily recognize the state of progress of the operation of measuring the tool nose positions of the designated tools by checking the second image Q2.

### (Optional or additional configurations)

Next, some optional or additional configurations that may be adopted in the tool status display device 1A, the numerical controller 10A for machine tools to be described later, or the machine tool 100A to be described later, in the first embodiment, will be described with reference to FIG. 1 to FIG. 38.

### (Switching between first image Q1 and second image Q2)

In the example depicted in FIG. 10, in response to receiving the first display command S1 from the processor 3, the display 4 simultaneously shows (1) the first image Q1 indicating whether or not each designated tool 50 is attached to the designated attachment surface 60, and (2) the image of a first control button 48a that allows the first image Q1 to be switched to the second image Q2. In the example depicted in FIG. 11, in response to receiving the second display command S2 from the processor 3, the display 4 simultaneously shows (1) the second image Q2 indicating whether or not the tool nose position of each designated tool 50 has already been measured, and (2) the image of a second control button 48b that allows the second image Q2 to be switched to the first image Q1.

The first control button 48a and second control button 48b improve the degree of freedom in the operation procedure. For example, the operator can select whether to perform the measurement of tool nose positions after all the designated tools 50 have been attached to the turret E, or to perform the attachment operation and the tool nose position measurement successively for each designated tool.

In the example depicted in FIG. 10 and FIG. 11, the control buttons (48a and 48b) are in the shape of a control tab. Note, however, the designs and shapes of the control buttons shown on the display 4 are not particularly limited herein. The control buttons shown on the display 4, to be mentioned in the following description, can have any design or shape.

To ensure the degree of freedom in the operation procedure, the processor 3 should preferably be configured to allow switching of the first image Q1 (see FIG. 10) to the second image Q2 (see FIG. 11) on the display 4 by sending the second display command S2 to the display 4 before all the designated tools 50 designated by the machining program 29e are attached to the turret E.

To ensure the degree of freedom in the operation procedure, the processor 3 should preferably be configured to allow switching of the second image Q2 (see FIG. 11) to the first image Q1 (see FIG. 10) on the display 4 by sending the first display command S1 to the display 4 before all the designated tools 50 designated by the machining program 29e are attached to the turret E.

### (Instruction image Q5)

In the example depicted in FIG. 10, in the first image Q1, a designated tool (hereinafter referred to as "first tool 50-1") before it is attached to the designated attachment surface 60 is selected. This selection is made via the input unit 11 of the tool status display device 1A.

In the example depicted in FIG. 10, in response to the selection of the first tool 50-1 before it is attached to the designated attachment surface 60 from among at least one designated tool 50 in the first image Q1, the processor 3 presents an instruction image Q5 on the display 4 including an instruction to attach this first tool 50-1.

In the case where the instruction image Q5 is shown on the display 4, the operator can attach the first tool 50-1 to the turret E following the instruction. This allows efficient attachment of the first tool 50-1 to the turret E.

In the example depicted in FIG. 10, the instruction image Q5 includes recommended relative position data DA for the first tool 50-1 relative to the tool holding unit H. More specifically, the instruction image Q5 includes a recommended value DA1 of overhang for the first tool 50-1 relative to the tool holding unit H along the longitudinal direction of the first tool 50-1. In this case, the operator can attach the first tool 50-1 to the tool holding unit H such that the first tool 50-1 extends from the tool holding unit H by the recommended value DA1. This allows the operator to efficiently perform the operation of attaching the first tool 50-1 to the tool holding unit H.

As illustrated in FIG. 10, the above-described instruction image Q5 should preferably include the ID number 7n that identifies the designated attachment surface 60 to which the first tool 50-1 should be attached.

In the example depicted in FIG. 10, the display 4 shows (1) the above-described instruction image Q5 and (2) the above-described first image Q1 (in other words, the first image Q1 indicating whether or not each designated tool 50 is attached to the designated attachment surface 60) at the same time.

### (Third determination processing M3)

In the example depicted in FIG. 12, the processor 3 executes the determination processing program 29a stored in the memory 2 to implement third determination processing M3. More specifically, the processor 3 executes the third determination processing M3 for determining whether or not each designated tool designated by the machining program 29e is registered in data in association with a designated attachment surface 60 designated by the machining program 29e, based on the fourth data 24a that associates each attachment surface of the turret E with the tool registered in the data in association with the attachment surface, and the third data 23a mentioned above.

The third determination processing M3 includes (1) determining whether or not the first designated tool 51 designated by the machining program 29e is registered in the data in association with the first designated attachment surface 61. Additionally, the third determination processing M3 may include (2) determining whether or not the second designated tool 52 designated by the machining program 29e is registered in the data in association with the second designated attachment surface 62. Where "K" represents any natural number equal to or greater than 3, the third determination processing M3 may include (3) determining whether or not the "K-th" designated tool designated by the machining program 29e is registered in the data in association with the "K-th" designated attachment surface.

The processor 3 executes the display program 29d stored in the memory 2 to generate a third display command S3 based on the results of the third determination processing M3. The processor 3 sends the third display command S3 that is generated based on the results of the third determination processing M3 to the display 4.

As illustrated in FIG. 13, in response to receiving the third display command S3, the display 4 shows a third image Q3 indicating whether or not each designated tool 50 designated by the machining program 29e is registered in the data in association with the designated attachment surface 60.

### (Third image Q3)

In the example depicted in FIG. 13, the third image Q3 includes (1) a sub image Q3-1 indicating whether or not the first designated tool 51 is registered in the data in association with the first designated attachment surface 61. Additionally, the third image Q3 may include (2) a sub image Q3-2 indicating whether or not the second designated tool 52 is registered in the data in association with the second designated attachment surface 62. Where "K" represents any natural number equal to or greater than 3, the third image Q3 may include (3) a sub image indicating whether or not the "K-th" designated tool is registered in the data in association with the "K-th" designated attachment surface.

Among all the designated tools 50, tools before they are registered in the data in association with respective designated attachment surfaces 60 are herein defined as unregistered designated tools 50q. Among all the designated tools 50, the tools that are registered in the data in association with their designated attachment surfaces 60 are herein defined as registered designated tools 50z.

In the example depicted in FIG. 13, of all the designated tools 50, the unregistered designated tools 50q are added with an attention mark 81c (e.g., exclamation mark) in the third image Q3. Of all the designated tools 50, the registered designated tools 50z are not added with the attention mark in the third image Q3.

In the example depicted in FIG. 13, the operator can recognize whether each designated tool 50 is an unregistered designated tool 50q or a registered designated tool 50z based on the presence or absence of the attention mark 81c.

In the example depicted in FIG. 13, the third image Q3 includes the attention marks 81c as information 8c that indicates whether or not each designated tool 50 is registered in the data in association with the designated attachment surface 60. Alternatively, or additionally, the third image Q3 may include some text information or highlighting as the information 8c.

### (Switching between first image Q1 and third image Q3)

In the example depicted in FIG. 13, in response to receiving the third display command S3 from the processor 3, the display 4 simultaneously shows (1) the third image Q3 indicating whether or not each designated tool 50 designated by the machining program 29e is registered in the data in association with the designated attachment surface 60, and (2) the image of a third control button 48c that allows the third image Q3 to be switched to the first image Q1. In the example depicted in FIG. 10, in response to receiving the first display command S1 from the processor 3, the display 4 simultaneously shows (1) the first image Q1 indicating whether or not each designated tool 50 designated by the machining program 29e is attached to the designated attachment surface 60, and (2) the image of a fourth control button 48d that allows the first image Q1 to be switched to the third image Q3.

The third control button 48c and fourth control button 48d improve the degree of freedom in the operation procedure. For example, the operator can select whether to perform the attachment operation of the designated tool 50 to the turret E after all the designated tools 50 have been registered in the data, or to perform the registration and attachment operations successively for each designated tool.

To ensure the degree of freedom in the operation procedure, the processor 3 should preferably be configured to allow switching of the third image Q3 (see FIG. 13) to the first image Q1 (see FIG. 10) on the display 4 by sending the first display command S1 to the display 4 before all the designated tools 50 are registered in the data in relation to the turret E.

To ensure the degree of freedom in the operation procedure, the processor 3 should preferably be configured to allow switching of the first image Q1 (see FIG. 10) to the third image Q3 (see FIG. 13) on the display 4 by sending the third display command S3 to the display 4 before all the designated tools 50 are registered in the data in relation to the turret E.

### (Tool data storage section 25)

As illustrated in FIG. 14, a part of the memory 2 may configure a tool data storage section 25 that stores tool data 25a.

The memory 2 (more specifically, tool data storage section 25) stores data that associates tool identifiers Bi identifying each of the plurality of tools B with tool characteristic data Bf indicating the features of the tools (e.g., type of tool, machining area, tool shape, etc.).

### (Machine data storage section 21)

As illustrated in FIG. 14, a part of the memory 2 may configure a machine data storage section 21.

In the example depicted in FIG. 14, the memory (machine data storage section 21) stores the first data 21a and the second data 22a described above. The memory (machine data storage section 21) may store the fourth data 24a described above.

The first data 21a is data that associates the attachment surfaces 7 of the turret E with the tools B attached to respective attachment surfaces 7. As illustrated in FIG. 15, the first data 21a may associate attachment surface identifiers 70i that identify the attachment surfaces 7 of the turret E with the tool identifiers Bi that identify the tools B attached to the respective attachment surfaces 7, to associate the attachment surfaces 7 of the turret E with the tools B attached to the respective attachment surfaces 7.

The second data 22a is data that identifies whether or not the tool nose positions of the respective tools B attached to the turret E have already been measured. As illustrated in FIG. 16, the second data 22a may identify whether or not the tool nose positions of the respective tools B attached to the turret E have already been measured by associating the tool identifiers Bi that identify the tools B on the respective attachment surfaces 7 with the data Bm that identifies whether or not the tool nose positions of the tools B have already been measured.

In FIG. 16, the value "0" in the data Bm means that the tool nose position of the tool B has not been measured yet, and the value "1" in the data Bm means that the tool nose position of the tool B has already been measured. The second data 22a may include tool nose position data Bp of tools B acquired by measurement. The second data 22a may include tool characteristic data Bf. The second data 22a may be incorporated in the tool data 25a. Alternatively, the second data 22a may be incorporated in the first data 21a.

The fourth data 24a is data that associates the attachment surfaces 7 of the turret E with the tools B registered in the data in association with respective attachment surfaces 7. As illustrated in FIG. 17, the fourth data 24a may associate the attachment surface identifiers 70i that identify the attachment surfaces 7 of the turret E with the tool identifiers Bi that identify the tools B registered in the data in association with the respective attachment surfaces 7, to associate the attachment surfaces 7 of the turret E with the tools B registered in the data in association with the respective attachment surfaces 7.

As illustrated in FIG. 17, the fourth data 24a may be included in the first data 21a. In the example depicted in FIG. 17, the first data 21a is data that associates each of the attachment surfaces of the turret E with an attachment surface identifier 70i that identifies the attachment surface 7, a tool identifier Bi that identifies the tool B registered in the data in association with the attachment surface 7, and the data Bt that identifies whether or not this tool B is attached to this attachment surface 7. In FIG. 17, the value "0" in the data Bt means that the tool B is not attached to the attachment surface 7, and the value "1" in the data Bt means that the tool B has already been attached to the attachment surface 7.

### (Third data storage section 23)

As illustrated in FIG. 14, a part of the memory 2 may configure a third data storage section 23 that stores the third data 23a. In the example depicted in FIG. 14, the third data 23a associates designated tool identifiers 50i that identify the designated tools 50 designated by the machining program 29e with the designated attachment surface identifiers 60i that identify the designated attachment surfaces 60 to which the designated tools 50 should be attached.

As illustrated in FIG. 6, the third data 23a may associate the designated tool identifiers 50i with the designated attachment surface identifiers 60i, and with the tool characteristic data 50f that indicates the characteristics of the designated tools 50.

### (Program storage section 290)

As illustrated in FIG. 14, a part of the memory 2 may configure a program storage section 290. In the example depicted in FIG. 14, the memory 2 stores a determination processing program 29a, a macro generating program 29b, a tool nose position measurement program 29c, and a display program 29d.

### (Example of process until third image Q3 is displayed)

First, a machining program 29e to be used for the machining of a workpiece is selected.

Second, the third data 23a is created based on the machining program 29e. The third data 23a may be created by the processor 3 of the tool status display device 1A, or other devices than the tool status display device 1A. The created third data 23a is stored in the memory 2.

Third, the processor 3 executes the third determination processing M3 described above based on the fourth data 24a and the third data 23a described above. The processor 3 executes the third determination processing M3 to extract all the unregistered designated tools 50q from all the designated tools 50 designated by the machining program 29e.

Fourth, the processor 3 sends the third display command S3 that is generated based on the results of the third determination processing M3 to the display 4, which, upon receiving the third display command S3, displays the third image Q3 (see FIG. 18).

### (Designated tool list LT3)

In the example depicted in FIG. 18, the third image Q3 includes an image of a list LT3 of all the designated tools 50 designated by the machining program 29e (hereinafter, "list image QL3"). In the example depicted in FIG. 18, in the list image QL3, information that prompts data registration in the data in association with a designated attachment surface 60 (e.g., attention mark 81c) is added to each of all the unregistered designated tools 50q alone.

Such a list image QL3 shown on the display 4 allows the operator to collectively recognize the data registration status of all the designated tools 50 designated by the machining program 29e. In some cases depending on the size of the display window, the list LT3 may not be displayed in its entirety. In such cases, the display 4 should preferably show a scroll bar SB3 that allows the list LT3 to be scrolled.

In the example depicted in FIG. 18, in the above-described list image QL3, each designated attachment surface 60 is associated with (1) a designated attachment surface identifier 60i that identifies the designated attachment surface 60, (2) the tool characteristic data 50f of the designated tool 50 and/or an illustration of the designated tool 50, and (3) the information (e.g., attention mark 81c) identifying whether or not this designated tool 50 is registered in the data in association with the designated attachment surface 60.

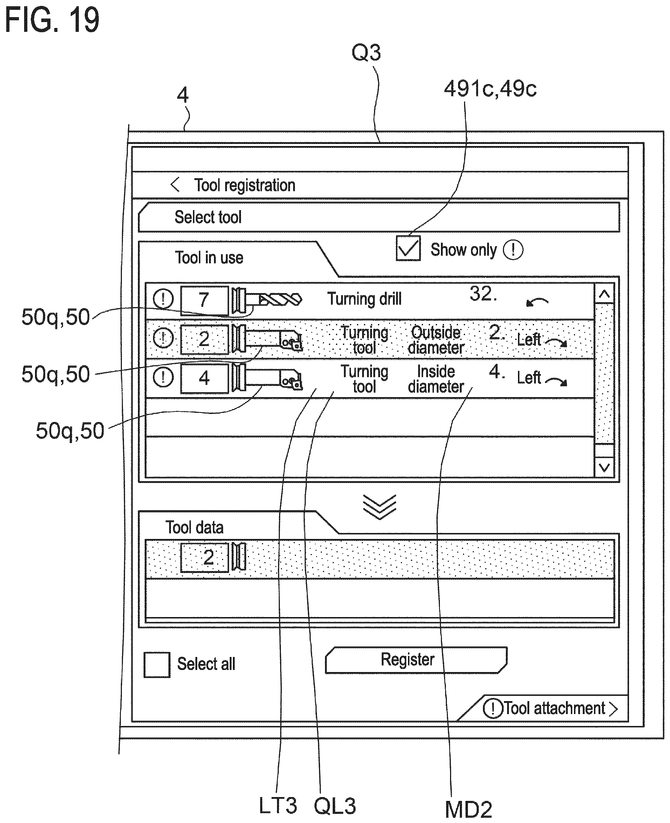

The display 4 may show an image of a switching control 49c (e.g., a check box 491c) in the above-described third image Q3. The processor 3 allows the switching control 49c (e.g., check box 491c) to be operated to toggle the display mode of the list image QL3 between (1) a first display mode MD1 (see FIG. 18) showing all the designated tools 50 designated by the machining program 29e and (2) a second display mode MD2 (see FIG. 19) showing all the unregistered designated tools 50q alone, extracted from all the designated tools 50.

In the example depicted in FIG. 18, in the list image QL3, a designated tool before it is registered in the data in association with the designated attachment surface 60 (hereinafter referred to as "third tool 50-3") is selected. This selection is made via the input unit 11 of the tool status display device 1A.

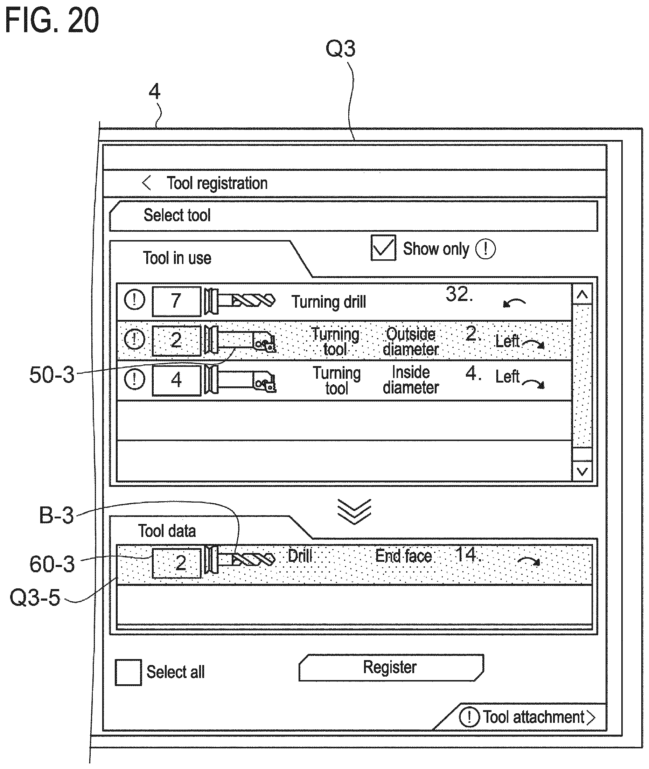

In the example depicted in FIG. 18, the third image Q3 may include an image Q3-5 that indicates the current status of a turret attachment surface that should be registered in the data as the target attachment surface of the third tool 50-3 (hereinafter referred to as "target attachment surface 60-3") in addition to the above-described list image QL3. In the example depicted in FIG. 18, no tool is registered in the data in association with the target attachment surface 60-3. Alternatively, in the example depicted in FIG. 20, a different tool B-3 from the third tool 50-3 is registered in the data in association with the target attachment surface 60-3, to which the third tool 50-3 should be attached.

### (Tool registration)

In the example depicted in FIG. 18, the third image Q3 includes an image of a Register button 47c that allows registration of a designated tool selected from the list LT3 (e.g., third tool 50-3) in the data in association with the designated attachment surface 60, in addition to the above-described list image QL3. Operating the Register button 47c registers the designated tool selected from the list LT3 in the data in association with the designated attachment surface 60. The display 4 may show an image of a Select All control 46c (e.g., check box 461c) in the third image Q3 for collectively selecting all the unregistered designated tools 50q. In this case, operating the Register button 47c after all the unregistered designated tools 50q have been collectively selected registers each of the unregistered designated tools 50q in the data in association with the corresponding designated attachment surface 60.

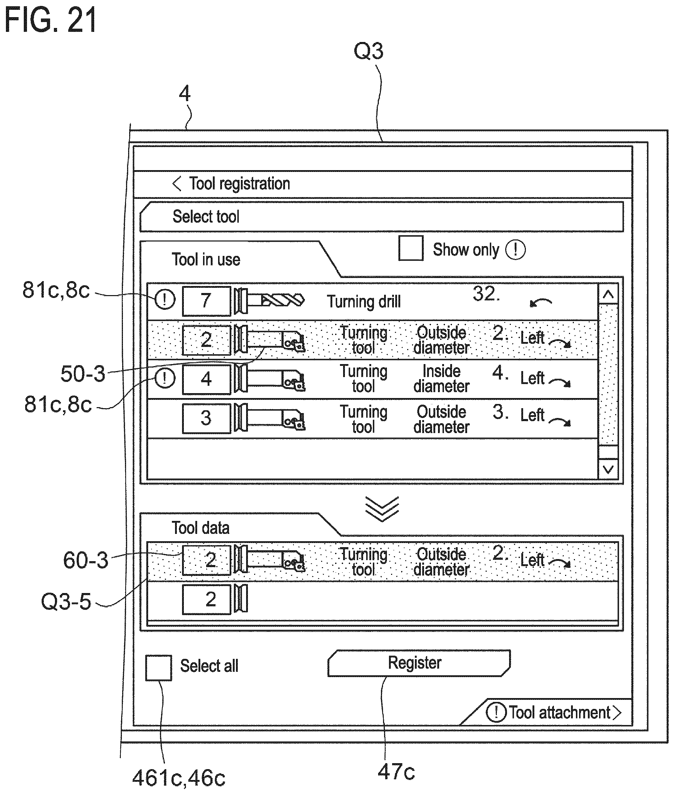

In the example depicted in FIG. 18, operating the Register button 47c changes the third tool 50-3 selected in the list image QL3 to a registered tool. FIG. 21 shows the state after the third tool 50-3 selected in FIG. 18 has been registered in the data in association with the designated attachment surface 60.

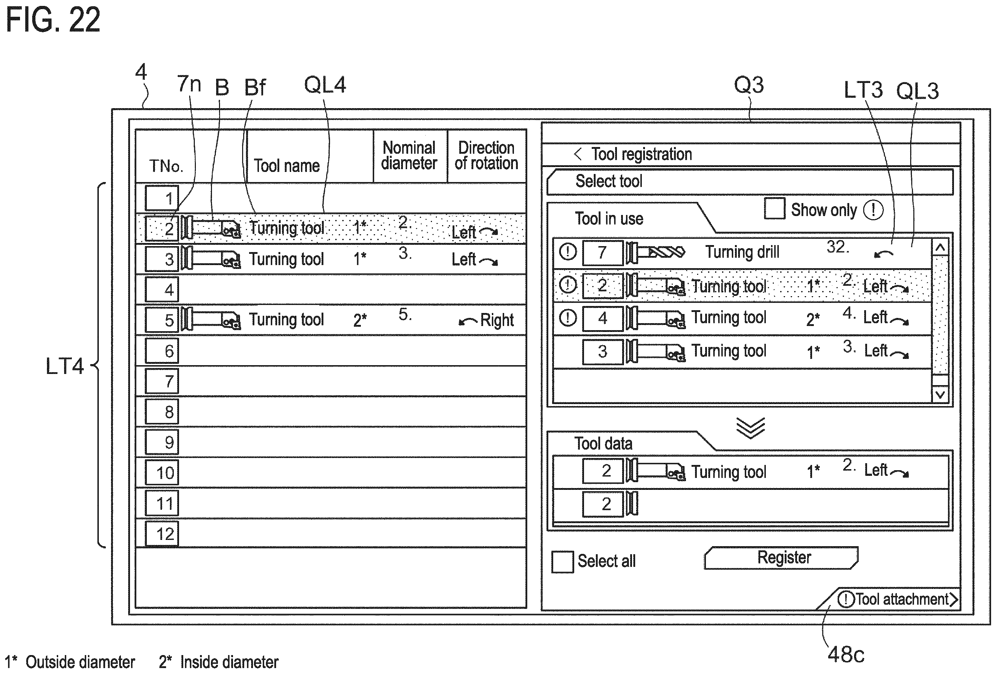

As illustrated in FIG. 22, the display 4 may be configured to simultaneously show the third image Q3 including the above-described list image QL3 and an image of a list LT4 of all the attachment surfaces 7 of the turret E (hereinafter referred to as "attachment surface list image QL4"). The attachment surface list image QL4 may be displayed in a different window from that of the list image QL3.

In the example depicted in FIG. 22, in the attachment surface list image QL4, each attachment surface 7 of the turret E is associated with (1) an ID number 7n that identifies the attachment surface 7, (2) the tool characteristic data Bf and/or an illustration of the tool B registered in the data in association with the attachment surface 7.

In the example depicted in FIG. 22, the operator can recognize the data registration status of the designated tool 50 by checking the above-described list image QL3. Also, the operator can recognize the current status of all the registered tools by checking the attachment surface list image QL4.

After the data registration of the designated tool 50 has been completed (e.g., after all of the designated tools 50 have been registered in the data), the image shown on the display 4 is switched from the third image Q3 to the first image Q1 (see FIG. 23) upon the third control button 48c being operated.

### (First list LT1 of registered tools)

Before the first image Q1 (see FIG. 23) is shown on the display 4, the processor 3 extracts unattached designated tools 50n from the registered tools. More specifically, the processor 3 extracts all the unattached designated tools 50n from all the registered tools that are registered in the data in association with one of the plurality of attachment surfaces of the turret E.

The processor 3 sends the first display command S1 to the display 4 so that the first image Q1 is shown on the display 4.

In the example depicted in FIG. 23, the first image Q1 includes a first list image QL1 that is an image of a first list LT1 of registered tools (more specifically, an image of a first list LT1 of all the registered tools). In the example depicted in FIG. 23, the first list image QL1 includes a plurality of the sub images (Q1-1 and Q1-2) mentioned above.

In the example depicted in FIG. 23, in the first list image QL1, information 8a (e.g., attention mark 81a) prompting to attach the tool to the designated attachment surface 60 is added to each of all the unattached designated tools 50n alone.

Such a first list image QL1 shown on the display 4 allows the operator to collectively recognize the attachment status of all the designated tools 50 designated by the machining program 29e. In some cases depending on the size of the display window, the first list LT1 may not be displayed in its entirety. In such cases, the display 4 should preferably show a scroll bar SB1 that allows the first list LT1 to be scrolled.

In the example depicted in FIG. 23, in the above-described first list image QL1, each attachment surface 7 of the turret E is associated with (1) an ID number 7n that identifies the attachment surface 7 of the turret E, (2) the tool characteristic data Bf of the tool B that is registered in the data in association with the attachment surface 7, and (3) the information 8a (e.g., attention mark 81a) indicating whether or not the tool B is an unattached designated tool 50n.

In the first list image QL1 shown in FIG. 23, the tools added with the attention mark 81a are the unattached designated tools 50n. On the other hand, the tools that are not added with the attention mark 81a in the first list image QL1 are either an attached designated tool 50x, or a non-designated tool N that is not designated by the currently selected machining program 29e.

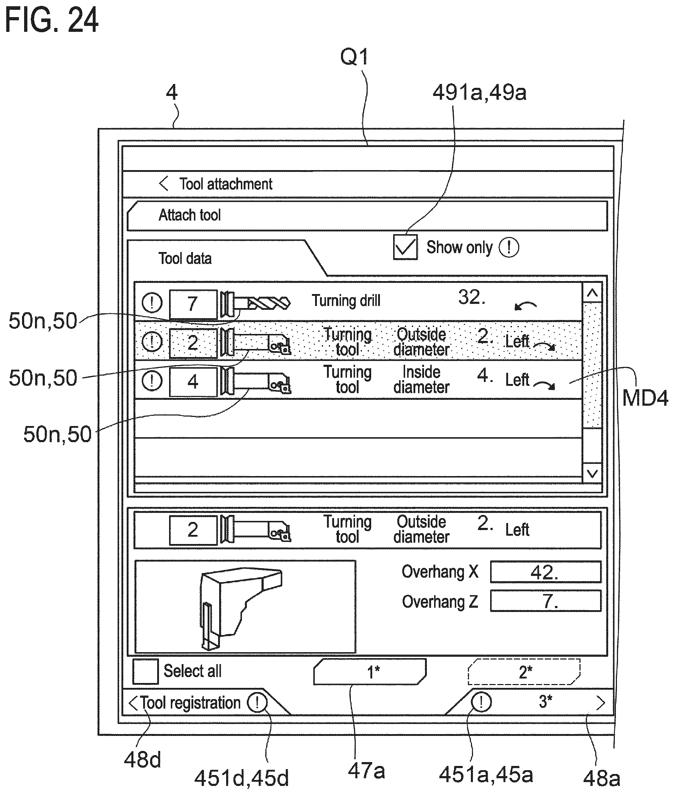

The display 4 may show an image of a switching control 49a (e.g., a check box 491a) in the above-described first image Q1. The processor 3 allows the switching control 49a (e.g., check box 491a) to be operated to toggle the display mode of the first list image QL1 between (1) a third display mode MD3 (see FIG. 23) showing all the registered tools and (2) a fourth display mode MD4 (see FIG. 24) showing all the unattached designated tools 50n alone, extracted from all the registered tools.

In the example depicted in FIG. 23, in the above-described first list image QL1, the first tool 50-1 before it is attached to the designated attachment surface 60 is selected. This selection is made via the input unit 11 of the tool status display device 1A.

In the example depicted in FIG. 23, in response to the selection of the first tool 50-1 in the first list image QL1, the processor 3 displays the instruction image Q5 including an instruction to attach the first tool 50-1. Since the instruction image Q5 has already been described, repetitive descriptions regarding the instruction image Q5 will be omitted.

### (Tool attachment)

In the example depicted in FIG. 23, the first image Q1 includes an image of Complete button 47a. In the example depicted in FIG. 23, the Complete button 47a being operated toggles the selected designated tool 50 (e.g., first tool 50-1) from an unattached designated tool 50n to an attached designated tool 50x. For example, the operator attaches the first tool 50-1 to the designated attachment surface 60 of the turret E following the instruction shown in the instruction image Q5. The Complete button 47a being operated by the operator after that toggles the first tool 50-1 from an unattached designated tool 50n to an attached designated tool 50x in the data.

The display 4 may show an image of a Select All control 46a (e.g., check box 461a) in the first image Q1 for collectively selecting all the unattached designated tools 50n. In this case, operating the Complete button 47a after all the unattached designated tools 50n have been collectively selected toggles each of all the unattached designated tools 50n to an attached designated tool 50x in the data.

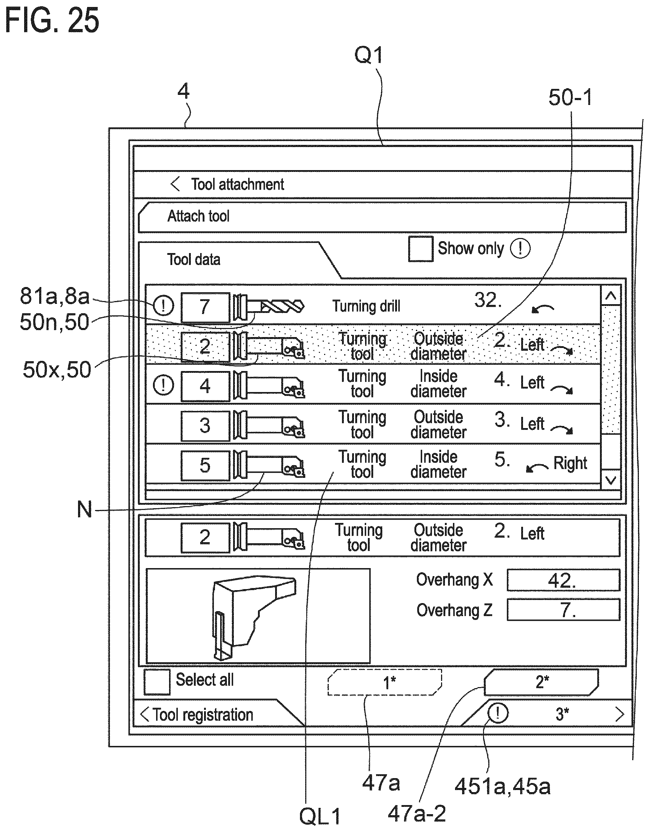

FIG. 25 shows the screen after the Complete button 47a has been operated.

As illustrated in FIG. 25, the first image Q1 may include an image of Attachment Incomplete button 47a-2. In the example depicted in FIG. 25, operating the Attachment Incomplete button 47a-2 toggles the designated tool (e.g., first tool 50-1) selected in the first list image QL1 from an attached designated tool 50x to an unattached designated tool 50n. Alternatively, operating the Attachment Incomplete button 47a-2 may toggle the non-designated tool N selected in the first list image QL1 from an attached tool to an unattached tool.

For example, the operator removes the first tool 50-1 or a non-designated tool N from the turret E. The Attachment Incomplete button 47a-2 being operated by the operator after that toggles the first tool 50-1 or the non-designated tool N from an attached tool to an unattached tool in the data.

In the example depicted in FIG. 23, operating the fourth control button 48d can switch the first image Q1 (see FIG. 23) shown on the display 4 to the third image Q3 (see FIG. 26). In the example depicted in FIG. 23, operating the first control button 48a can switch the first image Q1 (see FIG. 23) shown on the display 4 to the second image Q2 (see FIG. 27).

In the example depicted in FIG. 23, the processor 3 sends the first display command S1 to the display 4 so that the display 4 simultaneously shows (1) the first image Q1 described above, (2) the first control button 48a described above, and (3) information 45a (e.g., attention mark 451a) indicating whether or not there is an unmeasured designated tool 50p among all of the designated tools 50 (in other words, designated tools whose tool nose positions have not been measured yet). In the example depicted in FIG. 23, the attention mark 451a placed on the image of the first control button 48a indicates that there is an unmeasured designated tool 50p. On the other hand, if there is no attention mark on the image of the first control button 48a, it indicates that there is no unmeasured designated tool 50p.

The above-described information 45a shown on the display 4 allows the operator to recognize if it is necessary to carry out a measurement of the tool nose position during the operation related to attachment of the tools. In other words, the operator can perform the operations related to the attachment of the tools while being aware of the progress of the preparation operation before the machining of the workpiece.

In the example depicted in FIG. 24, the processor 3 sends the first display command S1 to the display 4 so that the display 4 simultaneously shows (1) the first image Q1 described above, (2) the fourth control button 48d described above, and (3) information 45d (e.g., attention mark 451d) indicating whether or not there is an unregistered designated tool 50q among all of the designated tools 50 (in other words, designated tools that are not registered in the data in association with designated attachment surfaces 60). In the example depicted in FIG. 24, the attention mark 451d placed on the image of the fourth control button 48d indicates that there is an unregistered designated tool 50q. On the other hand, if there is no attention mark on the image of the fourth control button 48d, it indicates that there is no unregistered designated tool 50q.

The above-described information 45d shown on the display 4 allows the operator to recognize if there remains a tool registration operation to perform during the operation related to the attachment of the tools.

After the attachment of the designated tool 50 has been completed (e.g., after all of the designated tools have been attached), the first control button 48a is operated to switch the first image Q1 (see FIG. 23) to the second image Q2 (see FIG. 27) on the display 4.

### (Second list LT2 of registered tools)

Before the second image Q2 (see FIG. 27) is shown on the display 4, the processor 3 extracts unmeasured designated tools 50p from the registered tools. More specifically, the processor 3 extracts all the unmeasured designated tools 50p from all the registered tools that are registered in the data in association with one of the plurality of attachment surfaces of the turret E.

The processor 3 sends the second display command S2 to the display 4 so that the second image Q2 is shown on the display 4.

In the example depicted in FIG. 27, the second image Q2 includes a second list image QL2 that is an image of a second list LT2 of registered tools (more specifically, an image of a second list LT2 of all the registered tools). In the example depicted in FIG. 27, the second list image QL2 includes a plurality of the sub images (Q2-1 and Q2-2) mentioned above.

In the example depicted in FIG. 27, in the second list image QL2, information 8b (e.g., attention mark 81b) prompting to measure the tool nose position is added to each of all the unmeasured designated tools 50p alone.

Such a second list image QL2 shown on the display 4 allows the operator to collectively recognize the tool nose position measurement status of all the designated tools 50 designated by the machining program 29e. In some cases depending on the size of the display window, the second list LT2 may not be displayed in its entirety. In such cases, the display 4 should preferably show a scroll bar SB2 that allows the second list LT2 to be scrolled.

In the example depicted in FIG. 27, in the above-described second list image QL2, each attachment surface 7 of the turret E is associated with (1) an ID number 7n that identifies the attachment surface 7 of the turret E, (2) the tool characteristic data Bf of a tool B registered in the data in association with the attachment surface 7, and (3) the information 8b (e.g., attention mark 81b) indicating whether or not the tool B is an unmeasured designated tool 50p.

In the second list image QL2 shown in FIG. 27, the tools added with the attention mark 81b are the unmeasured designated tools 50p. On the other hand, the tools that are not added with the attention mark 81b in the second list image QL2 are either a measured designated tool 50y, or a non-designated tool N that is not designated by the currently selected machining program 29e.

The display 4 may show an image of a switching control 49b (e.g., a check box 491b) in the above-described second image Q2. The processor 3 allows the switching control 49b (e.g., check box 491b) to be operated to toggle the display mode of the second list image QL2 between (1) a fifth display mode MD5 (see FIG. 27) showing all the registered tools and (2) a sixth display mode MD6 (see FIG. 28) showing all the unmeasured designated tools 50p alone, extracted from all the registered tools.

In the example depicted in FIG. 27, a designated tool before its tool nose position is measured (hereinafter referred to as "second tool 50-2") is selected in the second list image QL2. This selection is made via the input unit 11 of the tool status display device 1A.

### (Generation of measurement macro 28t)

The processor 3 executes the macro generating program 29b stored in the memory 2 to generate a measurement macro 28t. More specifically, the processor 3 executes the macro generating program 29b stored in the memory 2 in response to the selection of an unmeasured designated tool 50p (e.g., a second tool 50-2 that is a designated tool whose tool nose position has not been measured yet) in the second image Q2 as well as an operation performed to a macro generating button 47b shown on the display 4. The processor 3 executes the macro generating program 29b stored in the memory 2 also to generate the measurement macro 28t that is used to measure the tool nose position of the unmeasured designated tool 50p (e.g., second tool 50-2).

In the example depicted in FIG. 27, the second image Q2 includes an image of the macro generating button 47b that is for starting generation of the measurement macro 28t. The macro generating button 47b is a button that is used to initiate the writing of a program in MDI (Manual Data Input) format, for example. The measurement macro 28t is a macro incorporated in the tool nose position measurement program 29c.

FIG. 29 shows an example of the measurement macro 28t generated upon the macro generating button 47b being operated. This measurement macro 28t is stored in a temporary storage region of the memory 2.

As illustrated in FIG. 27, the display 4 may show an image of a Select All control 46b (e.g., check box 461b) for collectively selecting all of the unmeasured designated tools 50p in the second image Q2. In this case, operating the macro generating button 47b after all the unmeasured designated tools 50p have been collectively selected initiates generation of the measurement macro 28t (see FIG. 30) to be used to measure the tool nose positions of all the unmeasured designated tools 50p.

As illustrated in FIG. 27, the second image Q2 may include an image of a switch operation button 44b (e.g., Measured button 441b) that allows a designated tool 50 (e.g., second tool 50-2) selected via the input unit 11 to be changed from an unmeasured designated tool 50p to a measured designated tool 50y. In the example depicted in FIG. 27, operating the switch operation button 44b toggles the designated tool (e.g., second tool 50-2) selected in the second list image QL2 from an unmeasured designated tool 50p to a measured designated tool 50y (see FIG. 31). For example, the operator manually measures the tool nose position of the second tool 50-2. The switch operation button 44b being operated by the operator after that toggles the second tool 50-2 from an unmeasured designated tool 50p to a measured designated tool 50y in the data.

The switch operation button 44b shown on the display 4 allows the operator to selectively perform automatic measurement of the tool nose position or manual measurement of the tool nose position.

As illustrated in FIG. 31, the second image Q2 may include an image of a second switch operation button 44b-2 (e.g., Unmeasured button 441b-2) that allows a designated tool 50 (e.g., second tool 50-2) selected via the input unit 11 to be changed from a measured designated tool 50y to an unmeasured designated tool 50p. In the example depicted in FIG. 31, operating the second switch operation button 44b-2 toggles the designated tool (e.g., second tool 50-2) selected in the second list image QL2 from an measured designated tool 50y to an unmeasured designated tool 50p (see FIG. 27).

In the example depicted in FIG. 27, operating the second control button 48b can switch the second image Q2 (see FIG. 27) shown on the display 4 to the first image Q1 (see FIG. 25).

In the example depicted in FIG. 27, the processor 3 sends the second display command S2 to the display 4 so that the display 4 simultaneously shows (1) the second image Q2 described above, (2) the second control button 48b described above, and (3) information 45b (e.g., attention mark 451b) indicating whether or not there is an unattached designated tool 50n among all of the designated tools 50 (in other words, designated tools that are not attached to designated attachment surfaces 60). In the example depicted in FIG. 27, the attention mark 451b placed on the image of the second control button 48b indicates that there is an unattached designated tool 50n. On the other hand, if there is no attention mark on the image of the second control button 48b, it indicates that there is no unattached designated tool 50n.

The above-described information 45b shown on the display 4 allows the operator to recognize if there remains a tool attachment operation to perform during the operation related to the measurement of the tool nose position.

### (Numerical controller 10A for machine tools)

The numerical controller 10A for machine tools in the first embodiment will be described with reference to FIG. 1 to FIG. 32.

As illustrated in FIG. 32, the numerical controller 10A for machine tools (hereinafter simply "numerical controller 10A") in the first embodiment includes the memory 2, processor 3, and display 4. The numerical controller 10A may include an input unit 11, and/or a communication circuit 12. The memory 2, processor 3, display 4, input unit 11, and communication circuit 12 of the numerical controller 10A are respectively the same as the memory 2, processor 3, display 4, input unit 11, and communication circuit 12 of the tool status display device 1A in the first embodiment. Therefore, repetitive descriptions of the memory 2, processor 3, display 4, input unit 11, and communication circuit 12 will be omitted.

In the example depicted in FIG. 32, the memory 2 of the numerical controller 10A stores machining programs 29e. The memory 2 may include a workpiece information storage section 261 that stores workpiece information (e.g., workpiece shape data, etc.), and an origin information storage section 262 that stores the reference point information of the machine tool (e.g., origin data). The memory 2 may also include a temporary storage region 28 that temporarily stores measurement macros 28t generated by the processor 3.

The processor 3 of the numerical controller 10A executes a machining program 29e stored in the memory 2 to generate the first control command CR1 and second control command CR2.

The communication circuit 12 of the numerical controller 10A sends the first control command CR1 generated by the processor 3 to the moving unit 95 (see FIG. 1) that moves the turret E. The communication circuit 12 sends the second control command CR2 generated by the processor 3 to the rotation drive unit 96 (see FIG. 1) that rotates the turret E about the first axis AX.

The numerical controller 10A for machine tools in the first embodiment provides the same effects as the tool status display device 1A in the first embodiment. In addition, the numerical controller 10A for machine tools can control the control targets of the machine tool (e.g., moving unit 95, rotation drive unit 96, and others).

The processor 3 of the numerical controller 10A may execute a tool nose position measurement program 29c (more specifically, a tool nose position measurement program 29c including a measurement macro 28t incorporated therein) to generate operation commands for measuring the tool nose positions of the unmeasured designated tools 50p described above. The operation commands are sent to each of the moving unit 95 and the rotation drive unit 96 via the communication circuit 12.

### (Machine tool 100A)

The machine tool 100A in the first embodiment will be described with reference to FIG. 1 to FIG. 38.

As illustrated in FIG. 33, the machine tool 100A in the first embodiment includes a turret E that has a plurality of attachment surfaces 7, a memory 2, a processor 3 (e.g., at least one processor 3a), a display 4, a moving unit 95, a rotation drive unit 96, a workpiece holder 91, a measurement unit 97, and a communication circuit 12. In the example depicted in FIG. 33, the processor 3 is included in the numerical controller 10A.

As illustrated in FIG. 34, the memory 2 stores (1) first data 21a that associates each of the attachment surfaces of the turret E with the tool B that is attached to each attachment surface, (2) second data 22a that identifies whether or not the tool nose positions of the respective tools attached to the turret E have already been measured, and (3) a machining program 29e. The memory 2 may store a determination processing program 29a, a macro generating program 29b, a tool nose position measurement program 29c, a display program 29d, and so on.

The configuration of the memory 2 and the contents stored in the memory 2 are the same as those in the tool status display device 1A of the first embodiment (or the numerical controller 10A for machine tools in the first embodiment). Therefore, repetitive descriptions of the memory 2 will be omitted.

The processor 3 execute the first determination processing M1. The first determination processing M1 is processing for determining whether or not each designated tool 50, which is defined as a tool designated by the machining program 29e, is attached to the designated attachment surface 60, which is one of the plurality of attachment surfaces 7, based on the third data 23a that associates each designated tool 50 with the designated attachment surface 60 to which the designated tool 50 should be attached, and the first data 21a described above.

The processor 3 sends the first display command S1 that is generated based on the results of the first determination processing M1 to the display 4.

The processor 3 executes the second determination processing M2 for determining whether or not the tool nose position of each designated tool 50 has already been measured based on the third data 23a and the second data 22a described above. The processor 3 sends the second display command S2 that is generated based on the results of the second determination processing M2 to the display 4.

Additionally, the processor 3 may execute the third determination processing M3 for determining whether or not each designated tool 50 is registered in the data in association with the designated attachment surface 60, which is one of the plurality of attachment surfaces 7, based on the third data 23a and the fourth data 24a described above. The processor 3 may also send the third display command S3 that is generated based on the results of the third determination processing M3 to the display 4.

The processor 3 executes the machining program 29e to generate the first control command CR1 and second control command CR2. The processor 3 may execute the machining program 29e to generate other control commands (e.g., third control command to be sent to the second rotation drive unit 92 for the workpiece holder 91).

The contents of the processing executed by the processor 3 are the same as those of the processing executed by the processor 3 of the tool status display device 1A in the first embodiment (or the processor 3 of the numerical controller 10A for machine tools in the first embodiment). Therefore, repetitive descriptions of the contents of the processing executed by the processor 3 will be omitted.

The display 4 shows (1) the first image Q1 indicating whether or not each designated tool 50 is attached to the designated attachment surface 60 in response to receiving the first display command S1, and (2) the second image Q2 indicating whether or not the tool nose position of each designated tool 50 has already been measured in response to receiving the second display command S2. Additionally, the display 4 may show (3) the third image Q3 indicating whether or not each designated tool 50 is registered in the data in association with the designated attachment surface 60 in response to receiving the third display command S3.

The contents shown on the display 4 are the same as those shown on the display of the tool status display device 1A in the first embodiment. Therefore, repetitive descriptions of the contents shown on the display 4 will be omitted.

The moving unit 95 moves the turret E. The moving unit 95 moves the turret E one-dimensionally, two-dimensionally, or three-dimensionally.

As illustrated in FIG. 33, the moving unit 95 may include a first moving unit 95a that moves the turret E in a first direction DR1 parallel to the horizontal plane. Additionally, the moving unit 95 may include a second moving unit 95b that moves the turret E in a second direction DR2 parallel to the horizontal plane and perpendicular to the first direction DR1. The moving unit 95 may further include a third moving unit 95c that changes the height of the turret E. The moving unit 95 moves the turret E to bring a tool B attached to the turret E into contact with a workpiece. Thus the workpiece is machined with the tool B.

The rotation drive unit 96 rotates the turret E about the first axis AX.

The workpiece holder 91 includes jaws 94 for holding the workpiece, a chuck 93 to which the jaws 94 are attached, and a second rotation drive unit 92 that rotates the chuck 93 about a second axis AX2, for example. In the example depicted in FIG. 33, the second axis AX2 is parallel to the second direction DR2 mentioned in the foregoing.

The measurement unit 97 measures the positions of the tool noses Be of tools B. More specifically, the measurement unit 97 measures the position of the tool nose Be of the tool B that is attached to the turret E.

The measurement unit 97 includes a block 97c that defines a contact surface 971c for the tool nose Be of the tool B to touch, and the processor 3 that calculates the position of the turret E when the tool nose Be of the tool B and the contact surface 971c make contact with each other. The processor 3 calculates the position of the tool nose Be of the tool B relative to the reference point of the turret E based on the position of the turret E when the tool nose Be of the tool B makes contact with the contact surface 971c (in other words, the processor 3 measures the position of the tool nose Be of the tool B).

In the example depicted in FIG. 33, the machine tool 100A includes a block moving unit 98 that moves the block 97c of the measurement unit 97. The block moving unit 98 moves the block 97c between an advanced position for measuring the tool nose position and a retracted position outside the workpiece machining area.

The communication circuit 12 sends the first control command CR1 (see FIG. 32) generated by the processor 3 to the moving unit 95, and sends the second control command CR2 (see FIG. 32) generated by the processor 3 to the rotation drive unit 96. Additionally, the communication circuit 12 may send the third control command generated by the processor 3 to the second rotation drive unit 92 that rotates the chuck 93.

### (Tool nose position measurement of designated tool 50)

In the example depicted in FIG. 27, the processor 3 executes the macro generating program 29b when a designated tool 50 (e.g., a second tool 50-2) shown on the display 4 is selected and the macro generating button 47b shown on the display 4 is operated. The processor 3 executes the macro generating program 29b to generate the measurement macro 28t.

In the example depicted in FIG. 34, the processor 3 executes the tool nose position measurement program 29c in which the measurement macro 28t is incorporated, to generate a fourth control command CR4 and a fifth control command CR5. The communication circuit 12 sends the fourth control command CR4 to the rotation drive unit 96, and sends the fifth control command CR5 to the moving unit 95. In the example depicted in FIG. 33, the rotation drive unit 96 that receives the fourth control command CR4 rotates the turret E about the first axis AX to bring the designated tool 50 (e.g., second designated tool 50-2) closer to the block 97c. The moving unit 95 that receives the fifth control command CR5 moves the turret E to bring the tool nose of the designated tool 50 (e.g., second tool 50-2) into contact with the contact surface 971c of the block 97c. The tool nose position of the designated tool 50 is thus measured.

After the tool nose position of the designated tool 50 has been measured, the tool nose position data Bp of this designated tool 50 is stored in the memory 2 (see FIG. 16). The processor 3 changes this designated tool 50 (e.g., second tool 50-2) from an unmeasured designated tool 50p to a measured designated tool 50y in the data (see FIG. 35).

The machine tool 100A in the first embodiment provides the same effects as the tool status display device 1A in the first embodiment. For example, the operator can efficiently perform the preparation operation before the machining of the workpiece. Additionally, the machine tool 100A in the first embodiment allows for the machining of the workpiece to be swiftly started after the efficient preparation operation.

### (Attachment assist)

The machine tool 100A may include an assist feature that brings the designated attachment surface 60 to which an unattached designated tool 50n should be attached closer to the operator (in other words, access opening OP). In the example depicted in FIG. 36, the machine tool 100A includes an access opening OP that allows the operator to access the turret E. The machine tool 100A also includes a door 99 that can close this access opening OP. In the example depicted in FIG. 37, the memory 2 stores an attachment assist program 29g.

In the example depicted in FIG. 38, the first tool 50-1 before it is attached to the designated attachment surface 60 is selected from a list including at least one designated tool 50 in the first image Q1. In the example depicted in FIG. 38, the processor 3 executes the attachment assist program 29g in response to an operation performed to an attachment assist button 43. In the example depicted in FIG. 38, the attachment assist button 43 is a software button 43a shown on the display 4 (in other words, a button in the image). The attachment assist button 43 may be included in the first image Q1. Alternatively, as illustrated in FIG. 37, the attachment assist button 43 may be a hardware button 43b rather than a button in the image.

In the example depicted in FIG. 37, the processor 3 executes the attachment assist program 29g to generate control commands CM for moving the designated attachment surface 60 (e.g., second designated attachment surface 62) to which the first tool 50-1 should be attached toward the access opening OP. The processor 3 sends the generated control commands CM to at least one of the moving unit 95 and the rotation drive unit 95 via the communication circuit 12.

More specifically, the processor 3 executes the attachment assist program 29g to generate a rotation control command CM1. The processor 3 sends the generated rotation control command CM1 to the rotation drive unit 96. The rotation drive unit 96 rotates the turret E about the first axis AX (see arrow R1 in FIG. 36) to bring the designated attachment surface 60 (e.g., second designated attachment surface 62) to which the first tool 50-1 should be attached closer to the access opening OP.

Alternatively, or additionally, the processor 3 executes the attachment assist program 29g to generate a motion control command CM2. The processor 3 sends the generated motion control command CM2 to the moving unit 95. The moving unit 95 moves the turret E to bring the entire turret E closer to the access opening OP (see arrow D1 in FIG. 36).

The assist feature described above, if included in the machine tool 100A, allows the operator to attach a designated tool 50 to a designated attachment surface 60 of the turret E more efficiently.

### (Second embodiment)

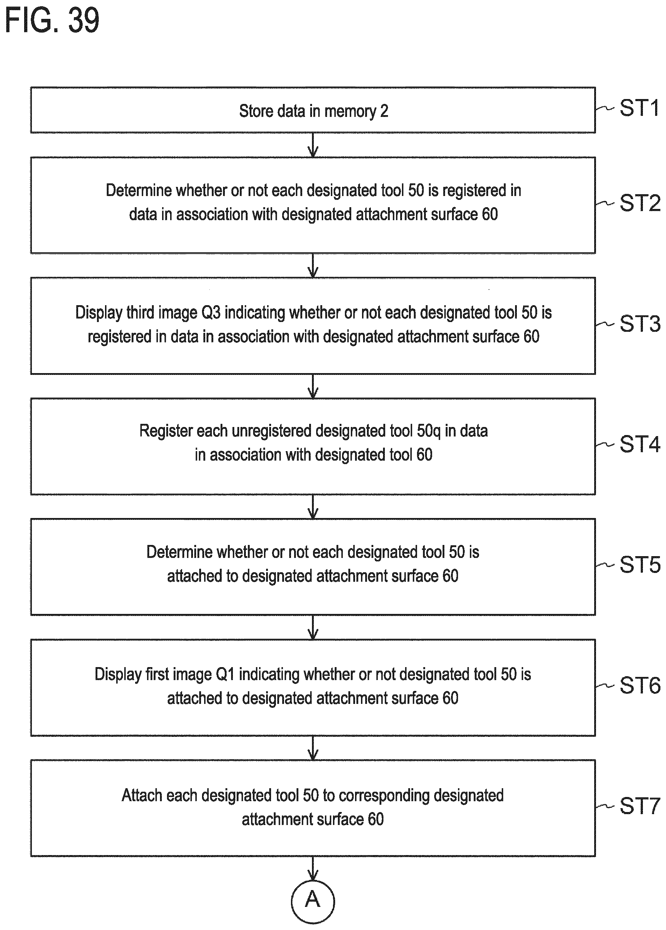

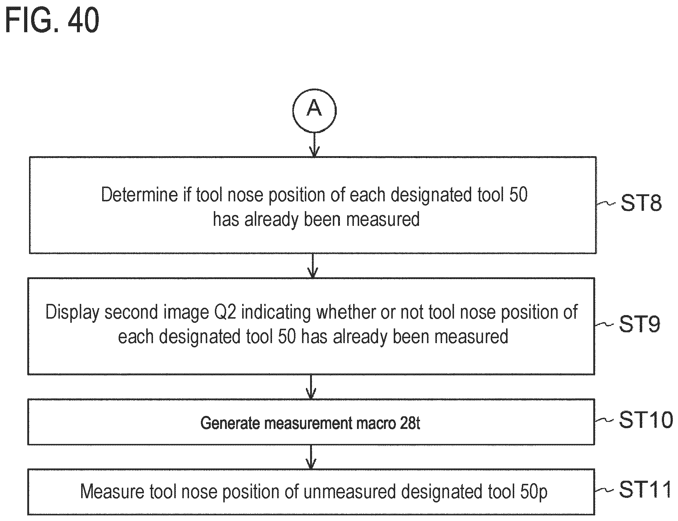

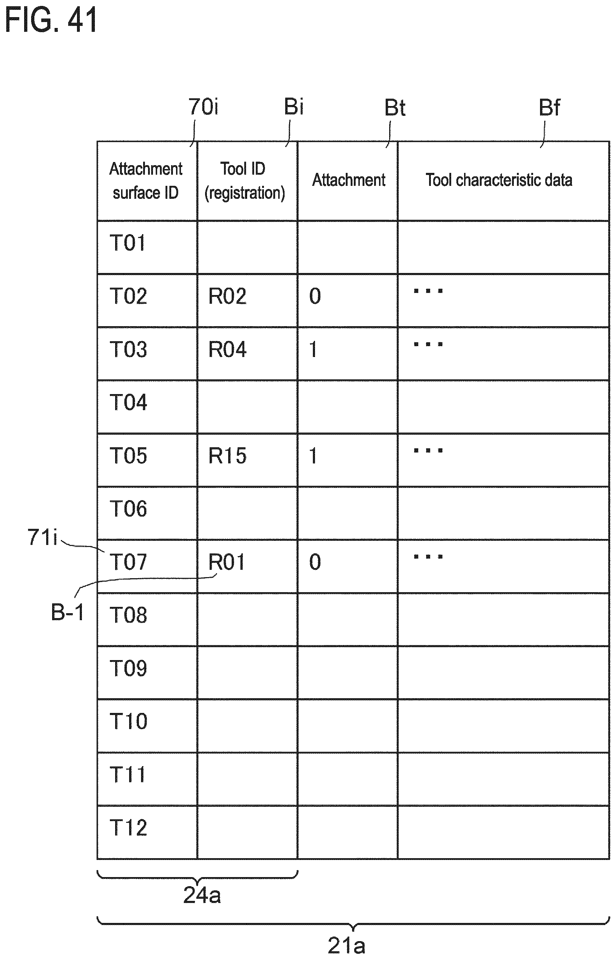

A tool preparation method in the second embodiment will be described with reference to FIG. 1 to FIG. 41. FIG. 39 and FIG. 40 are flowcharts showing one example of the tool preparation method in the second embodiment. FIG. 41 is a diagram illustrating one example of first data 21a stored in the memory 2.

The tool preparation method in the second embodiment is implemented using the tool status display device 1A (or the numerical controller 10A for machine tools) in the first embodiment, or other tool status display devices (or other numerical controllers). The tool preparation method in the first embodiment may be implemented using the machine tool 100A in the first embodiment, or other machine tools. The tool status display device 1A, numerical controller 10A for machine tools, and machine tool 100A in the first embodiment have already been described, and therefore repetitive descriptions of the tool status display device 1A, numerical controller 10A for machine tools, and machine tool 100A in the first embodiment will be omitted.

The tool preparation method in the second embodiment includes: (1) a step of determining whether or not each designated tool 50, which is defined as a tool designated by the machining program 29e, is attached to the designated attachment surface 60, which is one of the plurality of attachment surfaces 7, based on the third data 23a that associates each designated tool 50 with the designated attachment surface 60 to which the designated tool 50 should be attached, and the first data 21a that associates each attachment surface of the turret E having a plurality of attachment surfaces 7 with the tool B attached to each attachment surface; (2) a step of displaying a first image Q1 indicating whether or not each designated tool 50 is attached to the designated attachment surface 60 on the display 4; (3) a step of determining whether or not the tool nose position of each designated tool 50 has already been measured based on the second data 22a that identifies whether or not the tool nose position of each tool attached to the turret E has already been measured, and the third data 23a described above; and (4) a step of displaying a second image Q2 that indicates whether or not the tool nose position of each designated tool has already been measured on the display 4.

Additionally, the tool preparation method in the second embodiment may include (5) a step of determining whether or not each designated tool is registered in the data in association with the designated attachment surface 60 based on the fourth data 24a that associates each attachment surface of the turret E with the tool registered in the data in association with each attachment surface, and the third data 23a mentioned above; and (6) a step of displaying a third image Q3 indicating whether or not each designated tool is registered in the data in association with the designated attachment surface 60 on the display 4.

Next, each step of the tool preparation method in the second embodiment will be described in more detail.

In the first step ST1, data, such as first data 21a, second data 22a, fourth data 24a, etc., is stored in the memory 2. The first step ST1 is a storage step. As illustrated in FIG. 17, the first data 21a is data that associates each attachment surface of the turret E that has a plurality of attachment surfaces 7 with the tool attached to each attachment surface. The fourth data 24a is data that associates each attachment surface of the turret E that has a plurality of attachment surfaces 7 with the tool registered in the data in association with each attachment surface. As illustrated in FIG. 16, the second data 22a is data that identifies whether or not the tool nose positions of the respective tools attached to the turret E have already been measured.

Additionally, in the first step ST1, programs 29 such as the determination processing program 29a, macro generating program 29b, tool nose position measurement program 29c, display program 29d, and machining program 29e may be stored in the memory 2.

In the case where necessary data or necessary programs 29 are already stored in the memory 2, the first step ST1 is skipped.

In the second step ST2, it is determined whether or not each designated tool 50 designated by the machining program 29e is registered in the data in association with the designated attachment surface 60 that is one of the plurality of attachment surfaces 7 of the turret E and is designated by the machining program 29e. The second step ST2 is a determination step (hereinafter referred to as "third determination step"). The third determination step is performed by the processor 3 of the tool status display device 1, or the processor 3 of the machine tool 100 (more specifically, the processor 3 of the numerical controller 10).

In the third determination step, the processor 3 executes the third determination processing M3. In the third determination processing M3, it is determined whether or not each designated tool 50 is registered in the data in association with the designated attachment surface 60, which is one of the plurality of attachment surfaces 7, based on the third data 23a that associates each designated tool 50 with the designated attachment surface 60 to which the designated tool 50 should be attached, and the fourth data 24a that associates each attachment surface of the turret E that has a plurality of attachment surfaces 7 with the tool B registered in the data in association with the attachment surface.

The third determination step may include a plurality of sub-steps.

First, in sub-step ST2-1, a machining program 29e to be used in the current machining is selected via the input unit 11. This selection is made by the operator operating the input unit 11.

Second, in sub-step ST2-2, the third data 23a described above is created. The third data 23a is created based on the machining program 29e. The third data 23a may be created by the processor 3 of the tool status display device 1, or the processor 3 of the machine tool 100, or other processors. The created third data 23a should preferably be stored in the memory 2. The third data 23a may be created in advance before the second step ST2 is carried out. In this case, sub-step ST2-2 is skipped.

Third, in sub-step ST2-3, the processor 3 determines whether or not each designated tool 50 is registered in the data in association with the designated attachment surface 60 by comparing the third data 23a and the fourth data 24a. For example, for determining whether or not the first designated tool 51 is registered in the data in association with the first designated attachment surface 61, the processor 3 extracts the first designated attachment surface identifier 61i (T07) that identifies the first designated attachment surface 61 from the third data 23a (see FIG. 6). In the example depicted in FIG. 17, the processor 3 extracts the first attachment surface identifier 71i (T07) corresponding to the first designated attachment surface identifier 61i (T07) from the fourth data 24a. Further, in the example depicted in FIG. 6 and FIG. 17, the processor 3 determines whether or not the data on the first designated tool 51 associated with the first designated attachment surface 61i (T07) (e.g., first designated tool identifier 51i or tool characteristic data 51f of the first designated tool 51) in the third data 23a matches the data on the tool associated with the first attachment surface identifier 71i (T07) (e.g., tool identifier or tool characteristic data) in the fourth data 24a. When they match, the processor 3 determines that the first designated tool 51 is registered in the data in association with the first designated attachment surface 61. On the other hand, when they do not match, the processor 3 determines that the first designated tool 51 is not registered in the data in association with the first designated attachment surface 61. The example depicted in FIG. 17 is the latter case (in other words, the case where the first designated tool 51 is not registered in the data in association with the first designated attachment surface 61).

The processor 3 generates the third display command S3 based on the determination results of the third determination step (in other words, the results of the third determination processing M3).

In the third step ST3, the third image Q3 indicating whether or not each designated tool 50 is registered in the data in association with the designated attachment surface 60 is shown on the display 4. The third step ST3 is a display step (hereinafter referred to as "third display step"). In the third display step, the display 4 shows an image including the third image Q3 (see FIG. 18) based on the third display command S3. In the third display step, the display 4 may show a list image QL3. In the third display step, the display 4 may show an image Q3-5 that indicates the current status of a turret attachment surface that should be registered in data as the target attachment surface of the selected designated tool (e.g., target attachment surface 60-3), and images of the Select All control 46c, Register button 47c, third control button 48c, and/or switching control 49c.

The third display command S3 and the contents of the images shown on the display 4 have already been described in the first embodiment, and therefore repetitive descriptions of the third display command S3 and the contents of the images shown on the display 4 will be omitted.

In the fourth step ST4, each unregistered designated tool 50q is registered in the data in association with the corresponding designated attachment surface 60. The fourth step ST4 is a data registration step. In the example depicted in FIG. 18, the data registration step includes the operator's selecting an unregistered designated tool (e.g., third tool 50-3) from the list LT3 of designated tools shown on the display 4 via the input unit 11, and operating the Register button 47c shown on the display 4 via the input unit 11.

In the fourth step ST4, all of the unregistered designated tools 50q should preferably be each registered in the data in association with the corresponding designated attachment surface 60.

In the fifth step ST5, it is determined whether or not each designated tool 50 designated by the machining program 29e is attached to the designated attachment surface 60 that is one of the plurality of attachment surfaces 7 of the turret E and is designated by the machining program 29e. The fifth step ST5 is a first determination step. The first determination step is performed by the processor 3 of the tool status display device 1, or the processor 3 of the machine tool 100 (more specifically, the processor 3 of the numerical controller 10).

In the first determination step, the processor 3 executes the first determination processing M1. In the first determination processing M1, it is determined whether or not each designated tool is attached to the designated attachment surface 60, which is one of the plurality of attachment surfaces 7, based on the third data 23a that associates each designated tool with the designated attachment surface 60 to which the designated tool should be attached, and based on the first data 21a that associates each attachment surface of the turret E that has a plurality of attachment surfaces 7 with the tool B attached to the attachment surface.

In the first determination step, the processor 3 determines whether or not each designated tool is attached to the designated attachment surface 60 by comparing the third data 23a and the first data 21a. For example, for determining whether or not the first designated tool 51 is attached to the first designated attachment surface 61, the processor 3 extracts the first designated attachment surface identifier 61i (T07) that identifies the first designated attachment surface 61 from the third data 23a (see FIG. 6). In the example depicted in FIG. 41, the processor 3 extracts the first attachment surface identifier 71i (T07) corresponding to the first designated attachment surface identifier 61i (T07) from the first data 21a. Further, in the example depicted in FIG. 41, the processor 3 determines whether or not the tool B-1 associated with the first attachment surface identifier 71i (T07) (e.g., tool registered in the data in association with the first attachment surface 71) is an attached tool or an unattached tool based on the data Bt. When the tool B-1 is an attached tool, the processor 3 determines that the first designated tool 51 is attached to the first designated attachment surface 61. On the other hand, when the tool B-1 is an unattached tool, the processor 3 determines that the first designated tool 51 is not attached to the first designated attachment surface 61. The example depicted in FIG. 41 is the latter case (in other words, the case where the first designated tool 51 is not attached to the first designated attachment surface 61).

The processor 3 generates the first display command S1 based on the determination results of the first determination step (in other words, the results of the first determination processing M1).

In the sixth step ST6, the first image Q1 indicating whether or not each designated tool 50 is attached to the designated attachment surface 60 is shown on the display 4. The sixth step ST6 is a first display step. In the first display step, the display 4 shows an image including the first image Q1 (see FIG. 23) based on the first display command S1. In the first display step, the display 4 may show the first list image QL1. In the first display step, the display 4 may show the instruction image Q5. In the first display step, the display 4 may show images of the Select All control 46a, Complete button 47a, Attachment Incomplete button 47a-2, first control button 48a, fourth control button 48d, and/or switching control 49a.

The first display command S1 and the contents of the images shown on the display 4 have already been described in the first embodiment, and therefore repetitive descriptions of the first display command S1 and the contents of the images shown on the display 4 will be omitted.

In the seventh step ST7, unattached designated tools 50n are attached to the corresponding designated attachment surfaces 60.

In the example depicted in FIG. 23, the attachment step includes the operator's selecting an unattached designated tool (e.g., first tool 50-1) from the list of designated tools (more specifically, the first list LT1) shown on the display 4 via the input unit 11. In the example depicted in FIG. 23, the attachment step includes displaying the instruction image Q5 including an instruction to attach the selected unattached designated tool (e.g., first tool 50-1) on the display 4. The attachment step also includes the operator's attaching the unattached designated tool (e.g., first tool 50-1) to the designated attachment surface 60 of the turret E. Further, the attachment step includes the operator's operating the Complete button 47a shown on the display 4 via the input unit 11, with the unattached designated tool (e.g., first tool 50-1) being selected in the list of designated tools (more specifically, the first list LT1). The selected unattached designated tool 50n is thus changed to an attached designated tool 50x.

In the eighth step ST8, it is determined whether or not the tool nose position of each designated tool 50 designated by the machining program 29e has already been measured. The eighth step ST8 is a second determination step. The second determination step is performed by the processor 3 of the tool status display device 1, or the processor 3 of the machine tool 100 (more specifically, the processor 3 of the numerical controller 10).

In the second determination step, the processor 3 executes the second determination processing M2. In the second determination processing M2, it is determined whether or not the tool nose position of each designated tool 50 has already been measured based on the third data 23a that associates each designated tool 50 with the designated attachment surface 60 to which the designated tool 50 should be attached, and the second data 22a that identifies whether or not the tool nose position of each tool attached to the turret E has already been measured.

In the second determination step, the processor 3 determines whether or not the tool nose position of each designated tool 50 has already been measured by comparing the third data 23a and the second data 22a. For example, for determining whether or not the tool nose position of the first designated tool 51 has already been measured in the example depicted in FIG. 6, the processor 3 extracts either the first designated tool identifier 51i, the tool characteristic data 51f of the first designated tool 51, or the first designated attachment surface identifier 61i associated with the first designated attachment surface 51 as extracted data from the third data 23a. In the example depicted in FIG. 16, the processor 3 extracts a tool B-1 corresponding to the first designated tool 51 from the second data 22a by matching the extracted data with the second data 22a.

In the example depicted in FIG. 16, the processor 3 determines whether or not the tool nose position of the extracted tool B-1 has already been measured based on the data Bm. When the tool nose position of the tool B-1 has already been measured, the processor 3 determines that the tool nose position of the first designated tool 51 has already been measured. On the other hand, when the tool nose position of the tool B-1 has not been measured yet, the processor 3 determines that the tool nose position of the first designated tool 51 has not been measured yet. The example depicted in FIG. 16 is the latter case (in other words, the case where the tool nose position of the first designated tool 51 has not been measured yet).

The processor 3 generates the second display command S2 based on the determination results of the second determination step (in other words, the results of the second determination processing M2).

In the ninth step ST9, the second image Q2 that indicates whether or not the tool nose position of each designated tool 50 has already been measured is shown on the display 4. The ninth step ST9 is a second display step. In the second display step, the display 4 shows an image including the second image Q2 (see FIG. 27) based on the second display command S2. In the second display step, the display 4 may show the second list image QL2. In the second display step, the display 4 may show images of the Select All control 46b, macro generating button 47b, switch operation button 44b, second switch operation button 44b-2, second control button 48b, and/or switching control 49b.

The second display command S2 and the contents of the images shown on the display 4 have already been described in the first embodiment, and therefore repetitive descriptions of the second display command S2 and the contents of the images shown on the display 4 will be omitted.

In the tenth step ST10, a measurement macro 28t is generated. The tenth step ST10 is a macro generating step.

In the example depicted in FIG. 27, the macro generating step includes the operator's selecting an unmeasured designated tool (e.g., second tool 50-2) from the list of designated tools (more specifically, the second list LT2) shown on the display 4 via the input unit 11. In the example depicted in FIG. 27, the macro generating step includes the operator's operating the macro generating button 47b shown on the display 4 via the input unit 11, with at least one unmeasured designated tool (e.g., second tool 50-2) being selected in the list of designated tools (more specifically, the second list LT2).

The processor 3 executes the macro generating program 29b upon the macro generating button 47b being operated. The processor 3 executes the macro generating program 29b to generate the measurement macro 28t that is used to measure the tool nose position of at least one selected unmeasured designated tool. The processor 3 stores the generated measurement macro 28t in the temporary storage region of the memory 2.

In the eleventh step ST11, the tool nose position of the unmeasured designated tool is measured. The eleventh step ST10 is a tool nose position measurement step. The tool nose position measurement step is carried out using the measurement unit 97.

In the example depicted in FIG. 33, the tool nose position measurement step includes rotating the turret E about the first axis AX with the rotation drive unit 96 to bring the unmeasured designated tool (e.g., second tool 50-2) closer to the contact surface 971c of the measurement unit 97 (more specifically, the contact surface 971c of the block 97c). The tool nose position measurement step also includes moving the turret E with the moving unit 95 to bring the tool nose of the unmeasured designated tool (e.g., second tool 50-2) into contact with the contact surface 971c of the measurement unit 97 (more specifically, the contact surface 971c of the block 97c). Further, the tool nose position measurement step includes calculating, with the processor 3, the position of the turret E when the tool nose of the unmeasured designated tool and the contact surface 971c make contact with each other. The tool nose position measurement step also includes calculating, with the processor 3, the position of the tool nose Be of the tool B relative to the reference point of the turret E based on the position of the turret E when the tool nose Be of the tool B makes contact with the contact surface 971c. The tool nose position measurement step also includes storing the relative position data (in other words, data indicating the tool nose position) in the memory 2.

The tool preparation method in the second embodiment allows the operator to readily recognize whether or not each designated tool 50 designated by the machining program 29e is attached to the attachment surface 60 designated by the machining program 29e, as well as whether or not the tool nose position of each designated tool 50 designated by the machining program 29e has already been measured. This allows the operator to efficiently perform the preparation operation before the machining of the workpiece.

For example, let us assume that at least one of a plurality of designated tools 50 designated by the machining program 29e is an unmeasured designated tool 50p, and at least one of the plurality of designated tools 50 is a measured designated tool 50y. In such a case, the tool preparation method in the second embodiment allows the operator to readily identify the unmeasured designated tool 50p. The tool nose position measurement is performed only for the unmeasured designated tool 50p, so that unnecessary measurement operation is avoided. The higher efficiency of the preparation operation before the machining of the workpiece can increase the operation rate of the machine tool.

Moreover, according to the tool preparation method in the second embodiment, the first image Q1 indicating whether each of the designated tools 50 is an unattached designated tool 50n or an attached designated tool 50x is shown on the display 4, after which the second image Q2 indicating whether each of the designated tools 50 is an unmeasured designated tool 50p or a measured designated tool 50y is shown on the display 4. Therefore, the operator can efficiently perform the attachment operation of designated tools 50 and the operation of measuring the tool nose positions of the designated tools sequentially by successively checking the first image Q1 and the second image Q2.

Obviously, the present invention is not limited to the various embodiments and modifications described above, and these embodiments or modifications thereof can be modified or changed as required within the scope of the technical concept of the present invention. Various techniques used in respective embodiments or modifications thereof may be applied to other embodiments or modifications as long as there are no technical contradictions. Optional or additional features in various embodiments and modifications can be omitted as suited.

### Reference Signs List

1, 1A ... Tool status display device, 2 ... Memory, 3 ... Processor, 3a ... Processor, 4 ... Display, 7 ... Attachment surface, 7n ... ID number, 8a ... Information indicating whether or not each designated tool is attached to a designated attachment surface, 8b ... Information indicating whether or not the tool nose position of each designated tool has been measured, 8c ... Information indicating whether or not each designated tool is registered in data in association with a designated attachment surface, 10A, 10 ... Numerical controller, 11, 11a, 11b ... Input unit, 12 ... Communication circuit, 13 ... Bus, 21 ... Machine data storage section, 21a ... First data, 22a ... Second data, 23 ... Third data storage section, 23a ... Third data, 24a ... Fourth data, 25 ... Tool data storage section, 25a ... Tool data, 28 ... Temporary storage region, 28t ... Measurement macro, 29 ... Program, 29a ... Determination processing program, 29b ... Macro generating program, 29c ... Tool nose position measurement program, 29d ... Display program, 29e ... Machining program, 29g ... Attachment assist program, 41 Display with touchscreen, 43a, 43b, 43 ... Attachment assist button, 44b ... Switch operation button, 44b-2 ... Second switch operation button, 45a ... Information indicating whether or not there is an unmeasured designated tool, 45b ... Information indicating whether or not there is an unattached designated tool, 45d ... Information indicating whether or not there is an unregistered designated tool, 46a, 46b, 46c ... Select All control, 47a ... Complete button, 47a-2 ... Attachment Incomplete button, 47b ... Macro generating button, 47c ... Register button, 48a ... First control button, 48b ... Second control button, 48c ... Third control button, 48d ... Fourth control button, 49a, 49b, 49c ... Switching control, 50 ... Designated tool, 50-1... First tool, 50-2 ... Second tool, 50-3 ... Third tool, 50f ... Tool characteristic data, 50i ... Designated tool identifier, 50n ... Unattached designated tool, 50p ... Unmeasured designated tool, 50q ... Unregistered designated tool, 50x ... Attached designated tool, 50y ... Measured designated tool, 50z ... Registered designated tool, 51 ... First designated tool, 51f... Tool characteristic data of first designated tool, 51i ... First designated tool identifier, 52 ... Second designated tool, 52i ... Second designated tool identifier, 53i ... Third designated tool identifier, 54i ... Fourth designated tool identifier, 60 ... Designated attachment surface, 60-3 ... Target attachment surface, 60i ... Designated attachment surface identifier, 61 ... First designated attachment surface, 61i ... First designated attachment surface identifier, 62 ... Second designated attachment surface, 62i ... Second designated attachment surface identifier, 63 ... Third designated attachment surface, 63i ... Third designated attachment surface identifier, 64 ... Fourth designated attachment surface, 64i ... Fourth designated attachment surface identifier, 70i ... attachment surface identifier, 71 ... First attachment surface, 71i ... First attachment surface identifier, 72 ... Second attachment surface, 73 ... Third attachment surface, 74 ... Fourth attachment surface, 81a, 81b, 81c ... Attention mark, 91 ... Workpiece holder, 92 ... Second rotation drive unit, 93 ... Chuck, 94 ... Jaws, 95 ... Moving unit, 95a ... First moving unit, 95b ... Second moving unit, 95c ... Third moving unit, 96 ... Rotation drive unit, 97 ... Measurement unit, 97c ... Block, 98 ... Block moving unit, 99 ... Door, 100, 100A... Machine tool, 261 ... Workpiece information storage section, 262 ... Origin information storage section, 290 ... Program storage section, 441b ... Measured button, 441b-2 ... Unmeasured button, 451a, 451b, 451c ... Attention mark, 461a, 461b, 461c ... Check box, 491a, 491b, 491c ... Check box, 971c ... Contact surface, B, B-1, B-3 ... Tool, Be ... Tool nose, Bf ... Tool characteristic data, Bi ... Tool identifier, Bm ... Information identifying whether or not tool nose position has been measured, Bp ... Tool nose position data, Bt ... Data identifying whether or not tool is attached, DA... Recommended relative position data, DA1 ... Recommended value, E ... Turret, H ... Tool holding unit, LT1 ... First list, LT2 ... Second list, LT3 ... Designated tool list, LT4 ... List of all the attachment surfaces on the turret, M1 ... First determination processing, M2 ... Second determination processing, M3 ... Third determination processing, N ... Non-designated tool, OP ... Access opening, Q1 ... First image, Q2 ... Second image, Q3 ... Third image, Q1-1, Q1-2, Q2-1, Q2-2, Q3-1, Q3-2 ... Sub image, Q3-5 ... Image showing the current status of turret attachment surface, Q5 ... Instruction image, QL1 ... First list image, QL2 ... Second list image, QL3 ... List image, QL4 ... Attachment surface list image, SB1, SB2, SB3 ... Scroll bar

## Claims

1. A tool status display device comprising:
a memory configured to store first data that associates each of a plurality of attachment surfaces of a turret with a tool that is attached to each attachment surface, and second data that identifies whether or not tool nose positions of respective tools attached to the turret have already been measured;
a processor configured to execute:
first determination processing for determining whether or not each designated tool defined as a tool designated by a machining program is attached to a designated attachment surface, which is one of the plurality of attachment surfaces, based on third data that associates each designated tool with a designated attachment surface to which the designated tool should be attached, and based on the first data;
transmission of a first display command that is generated based on a result of the first determination processing to a display;
second determination processing for determining whether or not tool nose positions of respective designated tools have already been measured based on the third data and the second data; and
transmission of a second display command that is generated based on a result of the second determination processing to the display; and
the display configured to show, in response to receiving the first display command, a first image indicating whether or not each designated tool is attached to the designated attachment surface, and to show, in response to receiving the second display command, a second image indicating whether or not the tool nose position of each designated tool has already been measured.

2. The tool status display device according to claim 1,
wherein in the third data,
a first designated tool designated by the machining program is associated with a first designated attachment surface designated by the machining program, and
a second designated tool designated by the machining program is associated with a second designated attachment surface designated by the machining program,
wherein the first determination processing includes
determining whether or not the first designated tool is attached to the first designated attachment surface, which is one of the plurality of attachment surfaces, and
determining whether or not the second designated tool is attached to the second designated attachment surface, which is one of the plurality of attachment surfaces,
wherein the second determination processing includes
determining whether or not a tool nose position of the first designated tool has already been measured, and
determining whether or not a tool nose position of the second designated tool has already been measured,
wherein the first image includes
a sub image indicating whether or not the first designated tool is attached to the first designated attachment surface, and
a sub image indicating whether or not the second designated tool is attached to the second designated attachment surface, and
wherein the second image includes
a sub image indicating whether or not the tool nose position of the first designated tool has already been measured, and
a sub image indicating whether or not the tool nose position of the second designated tool has already been measured.

3. The tool status display device according to claim 1 or 2,
wherein the processor is configured to extract all unmeasured designated tools, which are defined as tools before measurement of their tool nose positions, among all the designated tools designated by the machining program, from registered tools that are registered in data in association with one of the plurality of attachment surfaces of the turret, and
wherein the second image includes a second list image that is an image of a second list of the registered tools, the second list image including information that prompts to measure the tool nose position, the information being added to each of all the unmeasured designated tools alone.

4. The tool status display device according to claim 3,
wherein the processor is configured to extract all unattached designated tools, which are defined as tools before being attached to the designated attachment surfaces, among all the designated tools designated by the machining program from the registered tools, and
wherein the first image includes a first list image that is an image of a first list of the registered tools, the first list image including information that prompts attachment to the designated attachment surface, the information being added to each of all the unattached designated tools alone.

5. The tool status display device according to any one of claims 1 to 4,
wherein the processor is configured to:
execute third determination processing for determining whether or not each designated tool is registered in data in association with a designated attachment surface based on the fourth data that associates each attachment surface of the turret with a tool registered in data in association with each attachment surface, and the third data; and
send a third display command that is generated based on a result of the third determination processing to the display, and
wherein the display device is configured to show a third image indicating whether or not each designated tool is registered in data in association with the designated attachment surface in response to receiving the third display command.

6. The tool status display device according to claim 5, wherein the processor is configured to:
extract all unregistered designated tools, which are defined as tools before being registered in data in association with the designated attachment surfaces, among all the designated tools designated by the machining program, from all of the designated tools; and
cause the display to show a list image that is an image of a list of all the designated tools, the list image including information that prompts to register the tool in data in association with the designated attachment surface, the information being added to each of all the unregistered designated tools alone.

7. The tool status display device according to any one of claims 1 to 6,
wherein the display is configured to simultaneously show, in response to receiving the first display command,
the first image indicating whether or not each designated tool is attached to the designated attachment surface, and
an image of a first control button that switches the first image to the second image, and
wherein the display is configured to simultaneously show, in response to receiving the second display command,
the second image indicating whether or not a tool nose position of each designated tool has already been measured, and
an image of a second control button that switches the second image to the first image.

8. The tool status display device according to claim 7, wherein the display is configured to simultaneously show, in response to receiving the first display command,
the first image indicating whether or not each designated tool is attached to the designated attachment surface,
an image of the first control button that switches the first image to the second image, and information indicating whether or not there is a tool whose tool nose position has not been measured yet in all of the designated tools.

9. The tool status display device according to any one of claims 1 to 8, wherein the processor is configured to cause the display to show an instruction image including an instruction to attach a first tool before being attached to the designated attachment surface in response to selection of the first tool from at least one designated tool in the first image.

10. The tool status display device according to claim 9, wherein the instruction image includes recommended relative position data for the first tool relative to a tool holding unit.

11. The tool status display device according to any one of claims 1 to 10,
wherein the memory is configured to store a macro generating program, and
wherein the processor is configured to execute the macro generating program stored in the memory in response to selection of a second tool that is the designated tool whose tool nose position has not been measured yet in the second image, and an operation performed to a macro generating button shown on the display, the processor generating a measurement macro to be used for measuring the tool nose position of the second tool by executing the macro generating program stored in the memory.

12. A numerical controller for machine tools, comprising the tool status display device according to any one of claims 1 to 11, and
a communication circuit configured to send a first control command generated by the processor to a moving unit that moves the turret, and to send a second control command generated by the processor to a rotation drive unit that rotates the turret about a first axis.

13. A machine tool comprising:
a turret including a plurality of attachment surfaces;
a memory configured to store first data that associates each attachment surface of the turret with a tool that is attached to each attachment surface, second data that identifies whether or not tool nose positions of respective tools attached to the turret have already been measured, and a machining program;
a processor configured to execute:
first determination processing for determining whether or not each designated tool defined as a tool designated by a machining program is attached to a designated attachment surface, which is one of the plurality of attachment surfaces, based on third data that associates each designated tool with a designated attachment surface to which the designated tool should be attached, and based on the first data;
transmission of a first display command that is generated based on a result of the first determination processing to a display;
second determination processing for determining whether or not tool nose positions of respective designated tools have already been measured based on the third data and the second data;
transmission of a second display command that is generated based on a result of the second determination processing to the display; and
generation of a first control command and a second control command by executing the machining program;
the display configured to show, in response to receiving the first display command, a first image indicating whether or not each designated tool is attached to the designated attachment surface, and to show, in response to receiving the second display command, a second image indicating whether or not the tool nose position of each designated tool has already been measured;
a moving unit configured to move the turret;
a rotation drive unit configured to rotate the turret about a first axis;
a workpiece holder configured to hold a workpiece,
a measurement unit configured to measure tool nose positions; and
a communication circuit configured to send the first control command to the moving unit, and to send the second control command to the rotation drive unit.

14. The machine tool according to claim 13, further comprising a door configured to close an access opening that allows an operator to access the turret, wherein
the memory is configured to store an attachment assist program, wherein
the processor is configured to execute the attachment assist program in response to selection of a first tool before being attached to the designated attachment surface from at least one designated tool in the first image, and an operation performed to an attachment assist button, and wherein
the processor is configured to generate a control command for moving the designated attachment surface to which the first tool should be attached toward the access opening, and to send the control command to at least one of the moving unit and the rotation drive unit via the communication circuit, by executing the attachment assist program.

15. A tool preparation method comprising:
a step of determining whether or not each designated tool defined as a tool designated by a machining program is attached to a designated attachment surface, which is one of a plurality of attachment surfaces, based on third data that associates each designated tool with a designated attachment surface to which the designated tool should be attached, and based on first data that associates each attachment surface of a turret having the plurality of attachment surfaces with a tool attached to each attachment surface;
a step of displaying a first image that indicates whether or not each designated tool is attached to the designated attachment surface on a display;
a step of determining whether or not a tool nose position of each designated tool has already been measured based on second data that identifies whether or not the tool nose position of each tool attached to the turret has already been measured, and the third data; and
a step of displaying a second image that indicates whether or not the tool nose position of each designated tool has already been measured on the display.
